# EUROPEAN PATENT APPLICATION

(11) **EP 1 931 123 A1**
(43) Date of publication of application: **11.06.2008**
(21) Application number: 06797156.4
(22) Date of filing: 31.08.2006
(51) Int. Cl.: H04M 11/00, G06Q 10/00, G06Q 50/00, H04B 7/26, H04M 1/00, H04Q 7/38

(54) **COMMUNICATION SYSTEM AND COMMUNICATION TERMINAL**

(30) Priority: 01.09.2005 JP 2005253155
(71) Applicant: ACCESS CO., LTD., Tokyo 101-0064 (JP)
(72) Inventor: SUEHIRO, Noriyuki, Tokyo 101-0064 (JP)
(74) Representative: Ablett, Graham Keith
(86) International application number: PCT/JP2006/317196
(87) International publication number: WO 2007/026810

(57) **Abstract**

There are provided a communication terminal and a communication system as follows. In a communication network connected to the communication terminal having an address book, an access right to a content disclosed on the network by a user of the communication terminal is judged according to the address book data of the communication terminal.

## Description

### Field of the Invention

The present invention relates to a communication terminal with a predetermined restriction which utilizes an address book and a communication system including a plurality of such communication terminals.

### Background of the Art

Communication terminals, which can be represented by a cell phone, have become capable of implementing various application programs and therefore implementing various functions accompanied with improvements in hardware configurations. Such functions which may be implemented by the communication terminals include, for example, an information browsing function through a network and a short-range communication function (e.g., infrared communication and Bluetooth (registered trademark), etc.)

Browsing information through the network is accomplished by information browser software (hereinafter referred to as a browser) which is equipped in the communication terminal. A user can use the browser to browse various information sites provided on the network.

Recently, a community-like web site called social networking site (hereinafter abbreviated as an SNS) has become known and widely spread as a form of such sites. The SNSs are set up for purposes such that, for example, users introduce their friends to one another for broader socialization. The SNSs can be categorized into, for example, a "free-for-all" type and an "invitees-exclusive" type. The SNSs in the "free-for-all" type is open to any person, and anyone can enter the community without limitation. For example, in an internet web site (http://blog.duogate.jp/service/) [found in August, 2005] provided by Duogate Inc., an SNS in the "free-for-all" type, in which users can use cell phones to participate in, is provided. On the other hand, in an SNS in the "invitees-exclusive" type, prospect users are not allowed to enter the community without invitations of users who are already accepted in the community. For example, in an internet web site (http://www.searchteria.co.jp/sns/top/index.html) [found in August, 2005] provided by SearchTeria Co., Ltd., an SNS in the "invitees-exclusive" type, in which users can use cell phones to participate in, is provided.

Meanwhile, short-range communication is accomplished by, for example, an infrared communication module equipped in the communication terminal. In Japanese Patent Provisional Publication 2004-289584 (Japan), a cell phone capable of communicating with another cell phone by using the infrared communication module equipped therein, is disclosed.

### Disclosure of the Invention

Described below are steps required when an existing user of the SNS presented by SearchTeria Co., Ltd. discloses, for example, his/her information to his/her friend:
(1) The existing user transmits an invitation mail to the friend.
(2) The friend receiving the invitation mail subscribes to the SNS.
(3) The existing user provides the friend with an ID and a password for the SNS.
(4) A list of members (e.g., a list of friends being allowed to view the information), which is provided exclusively to the existing user, being stored in a server of the SNS is updated.
(5) A list of members, which is provided exclusively to the friend, is created in the server of the SNS.
(6) Access authority to contents, which are exchanged between the existing user and the friend with reference to the lists of members, is provided.

In the SNS presented by SearchTeria Co., Ltd., the server must create various data to limit the disclosure of the contents among the users, as shown in the above (4) and (5). Such data creating operations can burden the server considerably. Therefore, it has been desired to reduce the burdening operations of the server concerning the limitation of disclosure.

Further, the cell phone disclosed in the above Japanese Patent Provisional Publication 2004-289584, for example, is configured to establish infrared communication based on a predetermined communication protocol by having the cell phones contacting with each other. However, the infrared communication can be established regardless of reliability of the another cell phone, and security of the communication can be a concern. Therefore, a method to appropriately limit and allow users for the infrared communication has been required.

That is, with the multifunctionality of the communication terminals, improvement in efficiencies concerning the various functions and security of the communication terminals is required. In order to fulfill the requirement, for example, easy and appropriate setting of a user restriction (e.g., limitation on contents to be published and admission for infrared communication) against various functions can be considered.

In view of the aforementioned circumstances, it is a problem to be solved by the present invention that a communication terminal and a communication system, in which a user restriction against various functions such as contents publication and infrared communication can be set by the communication terminal, are provided.

According to an aspect of the present invention to solve the above problem, there is provided a communication system, in which a communication terminal having address book data and a server storing a duplicate of the address book data are interconnected within a network, wherein the communication terminal is provided with a data storing unit to store the address book data, a data updating unit to update the address book data, and a communication unit to communicate with another communication terminal by using communication destination information which is stored in the address book data, and the server is provided with a duplicate storing unit to store the duplicate of the address book data, a content storing unit to store contents being associated with a user of the communication terminal, a user identifying information obtaining unit to obtain user identifying information which identifies a user of an external device, being other than the communication terminal, in response to a permission request to obtain the contents from the external device, and a judging unit to judge permissibility of obtaining the contents based on the user identifying information obtained by the user identifying information obtaining unit, the communication destination information included in the duplicate of the address book data, and/or information in association with those.

According to the communication system configured as above, targets to publish the contents can be restricted based on the address book data registered in the communication terminal of the user, therefore, the user of the communication terminal can publish the contents within an appropriate disclosure range without specific setting. Further, due to the user information identifying information by which the user of the communication terminal is identified, security in a high level can be achieved. Furthermore, the duplicate of the address book to be used for permission to obtain the contents and the contents are stored in the server, therefore, communication with the communication terminal which belongs to the user who publishes the contents is unnecessary when permission to obtain is given and the contents are delivered. Thus, necessary process can be performed in shorter time.

According to another aspect of the present invention, there is provided a communication system in which a communication terminal and a server are interconnected within a network, wherein the communication terminal is provided with a data storing unit to store the address book data, a data updating unit to update the address book data, and a communication unit to communicate with the server and with another communication terminal by using communication destination information which is stored in the address book data, wherein the server is provided with a content storing unit to store contents being associated with a user of the communication terminal, a user identifying information obtaining unit to obtain user identifying information which identifies a user of an external device, being other than the communication terminal, in response to a permission request to obtain the contents from the external device, and a judging unit to transmit the user identifying information to the communication terminal to inquire about as to whether the communication destination information corresponding to the user identifying information is included in the address book data and judge permissibility of obtaining the contents based on a result of the inquiry.

The communication system configured as above, the server does not store the address book data, therefore, a volume of a storage in the server can be maintained smaller.

According to still another aspect of the present invention, there is provided a communication terminal with an address book, having an address book search unit to search through the address book in response to a permission request for permission to execute a predetermined process from an external device, and a permissibility judging unit to judge permissibility of the predetermined process based on a search result from the address book search unit.

According to the communication terminal configured as above, a request from the external device to execute a process is restricted based on the address book data registered in the communication terminal of the user; therefore, the user of the communication terminal can restrict the users to be permitted to executed the process easily and suitably.

According to still another aspect of the present invention, there is provided a communication terminal with an address book, having an address book judging unit to judge as to whether information concerning an external device is included in the address book when the external device requests for permission to execute a predetermined process, and a permission judging unit to judge as to whether the predetermined operation is permitted based on a judgment result of the address book judging unit.

According to the communication terminal as configured above, the process is restricted based on the judgment as to whether the information concerning the external device which requests to execute the predetermined process is included in the address book; therefore, suitable user restriction can be provided by a lighter workload.

According to still another aspect of the present invention, there is provided a communication terminal with an address book, having a relationship judging unit to judge relationship between the external device and the communication terminal itself based on the address book when the external device requests for permission to execute the predetermined process, and a permission judging unit to judge as to whether the predetermined process is permitted based on a judgment result made by the relationship judging unit.

According to the communication terminal configured as above, the permissibility of the process request from the external device is automatically judged based on the address book; therefore, the user of the communication terminal can easily and suitably restrict the users to be permitted the process.

According to still another aspect of the present invention, there is provided a communication system having a plurality of communication terminals, each of which is provided with an address book, and which are interconnected within a network, wherein the communication terminal is provided with an address book judging unit to judge as to whether information concerning the other communication terminal is included in the address book when the other communication terminal requests for permission to execute a predetermined process, a relationship information requesting unit to request the other communication terminal for relationship information concerning relationship between the other communication terminal and itself when it is judged that the information concerning the other communication terminal is not included in the address book, an issuance requesting unit to request an issuance-capable communication terminal for issuing the relationship information when the relationship information is requested, a relationship information issuing unit to issue the relationship information to the other communication terminal in response to the issuance request, a relationship information transmitting unit to transmit the issued relationship information to the communication terminal which requested the relationship information, and a permissibility judging unit to judge permissibility of the predetermined process based on the relationship information transmitted from the requested communication terminal.

According to the communication system configured as above, the process is permitted if a predetermined relationship is verified between the other communication terminal, of which information is not included in the address book, and itself based on the relationship information. Therefore, communication with a larger number of users can be achieved while security in a certain level is maintained.

Employing the communication terminal and the communication system according to the present invention enables the user restriction which can be set easily and suitable for various functions, such as contents publication and infrared communication using the communication terminal.

### Brief Description of Accompanying Drawings

[Fig. 1] A diagram to illustrate an exterior view of a mobile terminal according to an embodiment of the present invention.
[Fig. 2] A block diagram to illustrate a configuration of the mobile terminal according to the embodiment of the present invention.
[Fig. 3] A diagram to illustrate an SNS according to the embodiment of the present invention.
[Fig. 4] A diagram to illustrate a process to be executed between a user using the SNS and a server according to the embodiment of the present invention.
[Fig. 5] A diagram to illustrate the SNS according to the embodiment of the present invention.
[Fig. 6] Diagrams to illustrate a flow to create a blog according to the embodiment of the present invention.
[Fig. 7] Screens to set disclosure levels according to the embodiment of the present invention.
[Fig. 8] A diagram to illustrate information of a friend registered in an address book folder in the mobile terminal according to the embodiment of the present invention.
[Fig. 9] A diagram to illustrate contents to be published by the user according to the embodiment of the present invention.
[Fig. 10] A diagram to illustrate a process to be performed within a mobile terminal as a server and a mobile terminal as a client according to the embodiment of the present invention.
[Fig. 11] A flowchart to illustrate a process to be executed in the mobile terminal as the server according to the embodiment of the present invention.
[Fig. 12] A diagram to illustrate a process to be executed in the respective mobile terminals according to the embodiment of the present invention.
[Fig. 13] A diagram to illustrate an alternative process of S106 in Fig. 11 according to the embodiment of the present invention.
[Fig. 14] A flowchart to illustrate a process to be executed in response to a track back according to the embodiment of the present invention.
[Fig. 15] A diagram to illustrate Bazaar according to the embodiment of the present invention.
[Fig. 16] A diagram to illustrate the SNS according to the embodiment of the present invention.
[Fig. 17] A flowchart to illustrate a process to be executed in the server according to the embodiment of the present invention.
[Fig. 18] A diagram to illustrate the SNS according to the embodiment of the present invention.
[Fig. 19] A diagram to illustrate a sequence of a process to be executed in the server and the mobile terminal according to the embodiment of the present invention.

### Detailed Description of the Embodiments

Hereinafter, referring to the accompanying drawings, an embodiment of the present invention will be described.

### (First Embodiment)

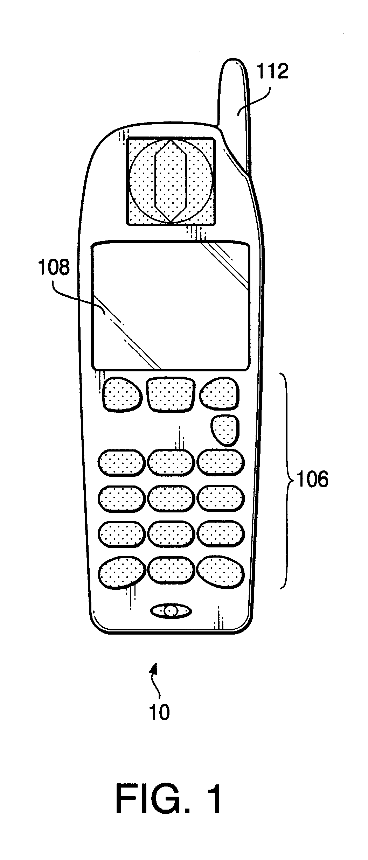

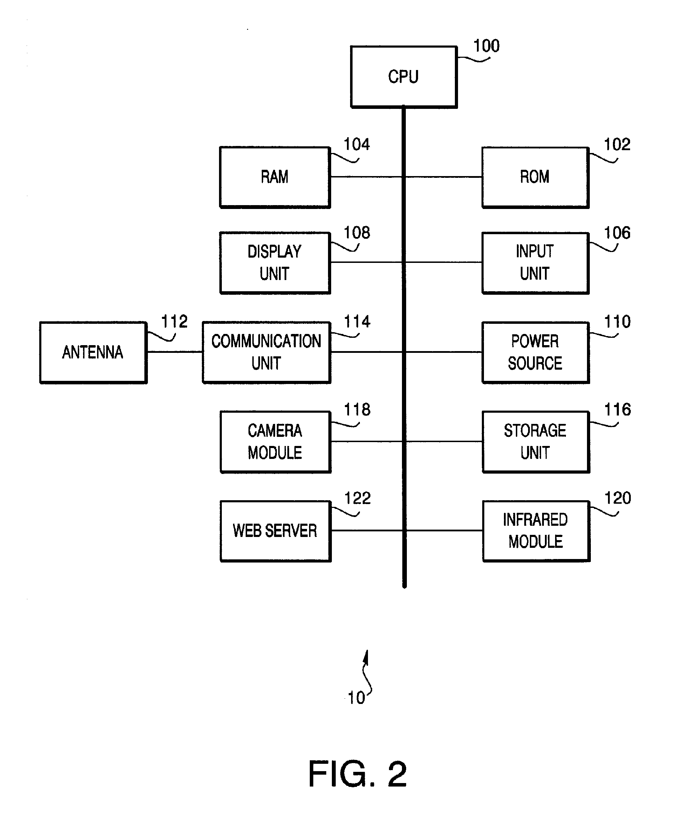

Fig. 1 is a diagram to illustrate an exterior view of a mobile terminal 10 according to the embodiment of the present invention. Fig. 2 is a block diagram to illustrate a configuration of the mobile terminal 10 according to the embodiment of the present invention. In the present embodiment, the mobile terminal 10 is a cell phone, which may be replaced with other small-sized portable terminal such as a PHS (Personal Handy phone System).

As shown in Figs. 1 and 2, the mobile terminal 10 includes a CPU (Central Processing Unit) 100, a ROM (Read Only Memory) 102, a RAM (Random Access Memory) 104, an input unit 106, a display unit 108, a power source 110, an antenna 112, a communication unit 114, a storage unit 116, a camera module 118, an infrared communication module 120, and a web server 122. These components are respectively operated by driving voltage supplied by the power source 110.

The CPU 100 administratively controls the entire mobile terminal 10. The ROM 102 stores various programs and data. The programs stored in the ROM 102 include, for example, a blog data creation program, a browser, an RSS (Rich Site Summary) reader, a mailer, and a PIM (Personal Information Manager). The blog data creation program is a program for a user to create a blog in the mobile terminal 10. The RSS reader is a known program which cyclically refers to designated web sites to collect updating information in an RSS format and displays the collected information to be viewed. The mailer is a program having known functions such as a mail client and messaging client to exchange e-mails and MMS (Multimedia Messaging Service) messages. The PIM is a known program to administrate various personal information such as a telephone number, an e-mail address, a resident address, and schedule.

The RAM 104 can serve as an area in which, for example, the various programs stored in the ROM 102 to be developed. The CPU 100 reads a program (e.g., a browser) stored in the ROM 102 to develop in a predetermined area of the RAM 104 and executes. Thus, for example, the user can browse a web site and the like through the browser.

The input unit 106 includes input keys to input characters, numerals, symbols, and the like. The input keys include, for example, direction indicator keys and an enter key. Each direction indicator key corresponds, for example, one of "up," "down," "left," and "right," and when one of the direction indicator keys is operated, a focus point (e.g., a cursor and a caret) in the display unit 108 can be shifted and a screen can be scrolled. The enter key is a device to execute an object (e.g., a hyperlink and the like indicated by an image or a character string) specified by, for example, the direction keys. Hereinafter, input operations through these keys given by the user will be referred to as user operations.

The communication unit 114 exchange radio signals in a predetermined frequency bandwidth through the antenna 112 according to a predetermined operation entered by the user, for example, through the input unit 106.

The storage unit 116 is, for example, an HDD (Hard Disk Drive). Various data can be stored in the storage unit 116. The data to be stored therein may be, for example, data to be administrated in the PIM, e-mail data, address book data in an address book folder, schedule data, and text and image data to compose a blog.

The camera module 118 is a known digital still camera modularized for a smaller device. The image data composing the blog, stored in the storage unit 116, is mostly data representing images captured by the camera module 118.

The infrared communication module 120 has a known configuration and functions. With this module, the mobile terminal 10 is enabled to accomplish short-range communication with another mobile terminal so that various data can be obtained and shared therebetween.

The web server 122 includes programs and data required to publish the blog created in the mobile terminal 10 to the web. The data stored in the web server 122 includes text data and image data for the blog to be published to the web (hereinafter referred to as blog data for publication), and information concerning access authorities of other users who access the contents of the blog. The programs stored in the web server 122 include, for example, a blog data publication program, an access authority check program, a browse permission information program, a blog data providing program, a CGI (Common Gateway Interface) program, etc. The blog data publication program is a program to perform various processes to publish the blog to the web. The access authority check program is a program to judge, for example, as to whether the contents created by the user of the mobile terminal 10 can be disclosed to a user who requests to browse. The browse permission information program is, similarly to the access authority check program, a program to judge as to whether the contents can be published to the user who requests to browse. The blog data providing program is a program to convert the blog data for publication into a web publication enabled format. The CGI program is a program to provide dynamic information to an external environment in response to a request from the external environment. These programs are executed by the CPU 100. Alternatively, these programs may be configured as a single program or more finely segmented programs.

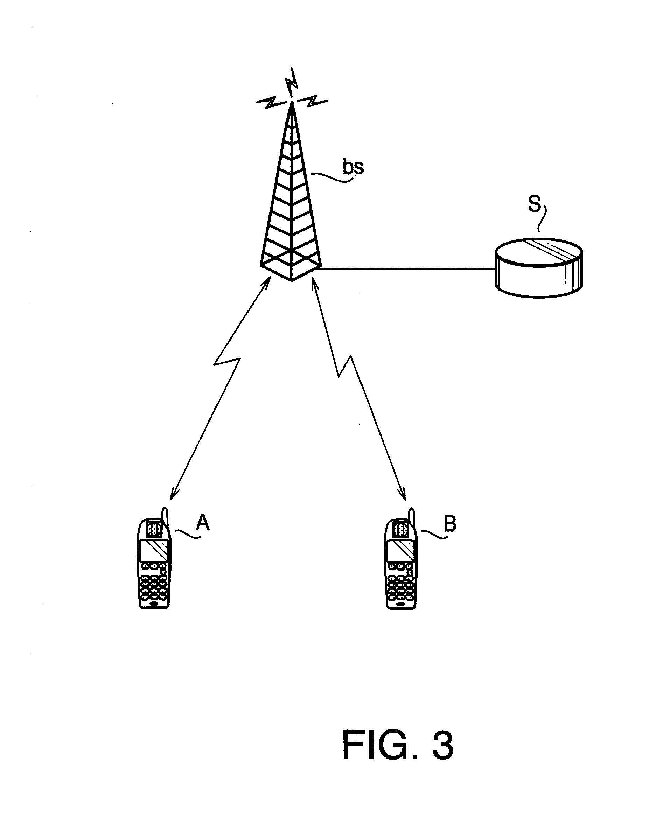

Fig. 3 is a diagram to illustrate an SNS according to the embodiment of the present invention. An object indicated by a reference sign "S" in the figure indicates a server provided and managed by a service provider of the SNS according to the present embodiment. An object indicated by a reference sign "bs" indicates a relay base station for mobile communication network, which is established by a mobile phone company of the mobile terminal 10. Objects indicated by reference signs "A" and "B" are mobile terminals 10 being owned by users who may use the SNS according to the present embodiment (hereinafter, "A" is referred to as a mobile terminal A, and "B" is referred to as a mobile terminal B. Further, a user of the mobile terminal A is referred to as a user A, and a user of the mobile terminal B is referred to as a user B) .

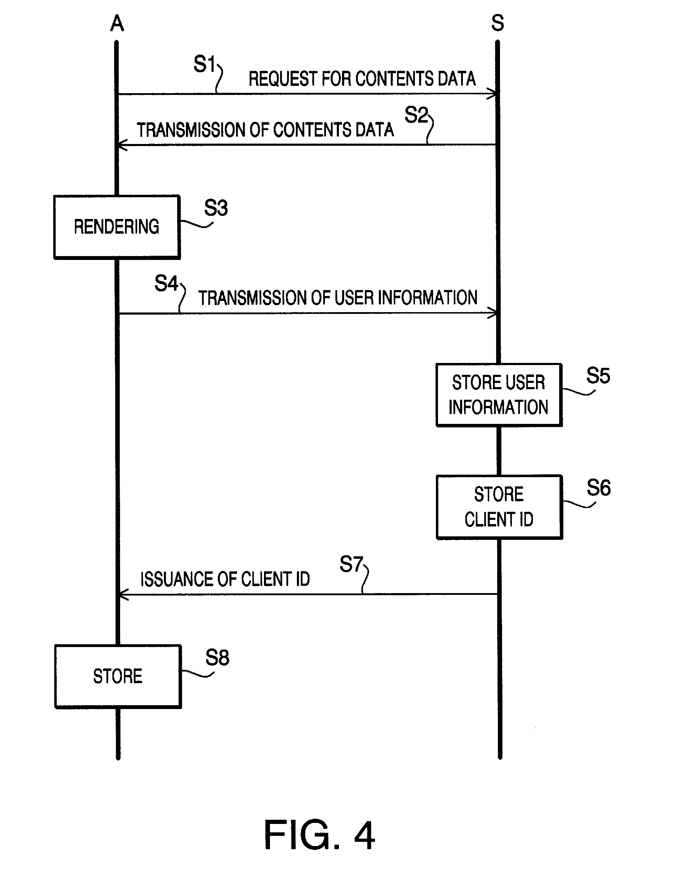

Fig. 4 is a diagram to illustrate a process to be executed between a user using the SNS and the server S according to the embodiment of the present invention. In order to use the SNS according to the present embodiment, the user is firstly required to obtain a client ID for himself/herself by communicating with the server S. The mobile terminal A is taken as an example. The user activates a browser installed in the mobile terminal A to access the SNS (i.e., the server S). (That is, the user requests for contents data.) (Step 1. In the following description and the accompanying drawings, each Step will be abbreviated as S.) The server S transmits the contents data (e.g., a front page) in response to the request (S2).

The browser interprets the contents data being received. Next, a layout is arranged based on the interpretation result to render the front page (S3). On the front page of the SNS, a link button which is indicated as, for example, "user registration" and the like is arranged. When the link button is selected through a user operation, the mobile terminal A and the server S communicate with each other to perform a process similar to S1 through S3. Consequently, an entry form to enter various information of the user A is presented on the browser. Next, when each entry field is filled with the information of the user A through user operations, and for example a button indicated as "transmit" is pressed, the information is transmitted to the server S (S4). The user information entered in the entry form can include, for example, a "user name," a "telephone number," an "e-mail address," etc.

The server S is provided with a user database. The user database is a database to store information (information corresponding to the entry form) of users who use the SNS. The server S stores the user information transmitted in the process of S4 in the database (S5) . The user database is a relational database, in which information entered in each entry field in the entry form is stored in association with the entry. After the user information is stored, the server S creates a unique client ID. Next, the created client ID is stored in association with the user information being stored in the process of S5 in the user database (S6) and issues the same to the mobile terminal A (S7).

The mobile terminal A stores the issued client ID, for example in the storage unit 116, as the user information of itself (S8). The process performed in the mobile terminal A and the server S enables the user A to obtain the client ID for the mobile terminal A and use the SNS. The user information for itself includes, for example, a "user name," a "telephone number," an "e-mail address," a "URL" (e.g., a URL of a blog created by the user), a "client ID," etc. The "user name," the "telephone number, and the "e-mail address" are information which has been stored in the storage unit 116 by the mobile phone company for example upon purchase of the mobile terminal A. The "URL" is information which can be stored through a user operation for example after the blog is created in the SNS by the user A.

Next, examples of a client ID obtaining process to be executed in mobile terminals in cases (1') and (2') as listed below are explained.
Case (1'): Neither of the mobile terminals possesses user information of the other mobile terminal.
Case (2'): The mobile terminal B possesses user information of the mobile terminal A.

In the present embodiment, the user information of the other mobile terminal refers to the address book data, which is registered in the address book folder in the storage unit 116. The address book data can include, for example, a "name," a "telephone number," an "e-mail address," a "URL," and a "client ID," etc. similarly to the user information of itself.

### <Case (1'): Neither of the mobile terminals possesses user information of the other mobile terminal. >

Each of the mobile terminal A and the mobile terminal B is configured to obtain user information of the other by infrared communication through the infrared communication module 120. In this configuration; however, the mobile terminal A and the mobile terminal B are required to be at a short range from each other. The mobile terminal B obtains the user information of the mobile terminal A including the client ID and registers the user information as address book data in the address book folder. Meanwhile, the mobile terminal A obtains the user information including the client ID of the mobile terminal B and registers the user information as address book data in the address book folder.

The mobile terminal A can prohibit the infrared communication with the mobile terminal B when the address book data of the other mobile terminal (i.e., the mobile terminal B in the present embodiment) is not registered in the address book folder, and the mobile terminal B is judged to be unreliable. On the contrary, when the address book data of the mobile terminal B is registered in the address book folder, and the mobile terminal B is
judged to be substantially reliable, the mobile terminal A can permit the infrared communication with the mobile terminal B. With these judging processes to restrict the communication with the other mobile terminal, infrared communication with an unknown
user can be prevented. Therefore, security in the communication is enhanced.

Meanwhile, users registered in the address book can be generally considered to be reliable; therefore, judgment of permissibleness based on the address book can be easily and appropriately made. The judging function may be activated and inactivated. When the judging function is inactivated, the judgment is not made at all, and the infrared communication is enabled at all times.

### <Case (2'): The mobile terminal B possesses user information of the mobile terminal A.>

For example, when the mobile terminal A and the mobile terminal B are located at a short range from each other, each mobile terminal can obtain the user information of the other mobile terminal through the infrared communication by the infrared communication module 120, similarly to the case (1').

When, for example, the mobile terminal A and the mobile terminal B are located at a long range, the mobile terminals are configured to communicate through a wireless communication network and other network such as the internet. A process in which the mobile terminal B obtains the client ID of the mobile terminal A is explained as an example. In this example, the mobile terminal B requests the mobile terminal A for the client ID based on the address book data (e.g., a text-message address, an e-mail address, etc.) of the mobile terminal A, which is registered in the address book folder of the mobile terminal B. The request includes the user information of the mobile terminal B (e.g., at least one of a "name," a "telephone number," and an "e-mail address").

The mobile terminal A searches through the address book folder in response to the request. As a result of the search, when it is judged that the address book data of the mobile terminal B is registered in the address book folder, the mobile terminal A transmits the client ID to the mobile terminal B. Therefore, the mobile terminal B can obtain the client ID of the mobile terminal A. As a result of the search, when it is judged that the address book data of the mobile terminal B is not registered, a notice for refusal of transmission of the client ID is transmitted to the mobile terminal B. That is, in this case, the user B can be unknown to the user A. Therefore, in terms of security, a process to prevent transmitting the client ID of the mobile terminal A to the mobile terminal B is performed.

The above-described exchange of the address book data between the mobile terminals is not limited to the infrared communication or the communication through the relay base station of the mobile phone company, but may be achieved through another short-range communication such as Bluetooth, etc. and other networks.

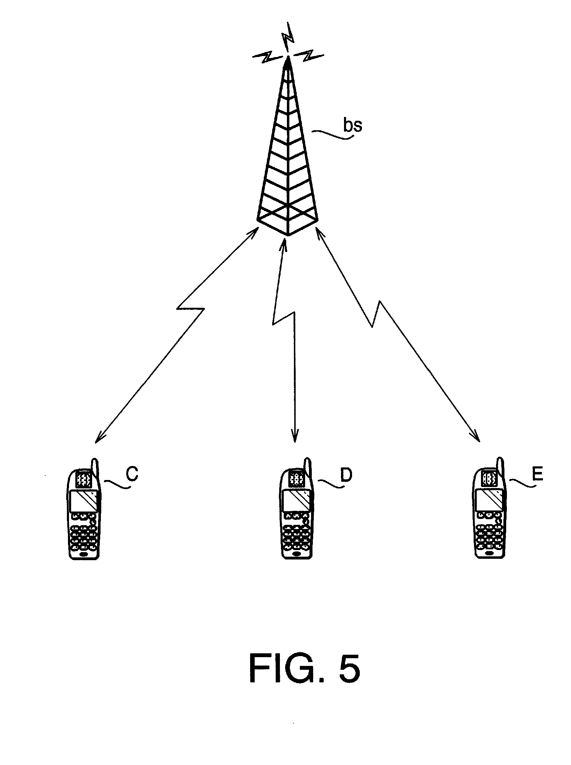

Fig. 5 is a diagram to illustrate the SNS according to the embodiment of the present invention. Objects indicated by reference signs "C," "D," and "E" are the mobile terminals 10 being owned by users who may use the SNS according to the present embodiment (hereinafter, "C" is referred to as a mobile terminal C, "D" is referred to as a mobile terminal D, and "E" is referred to as a mobile terminal E. Further, a user of the mobile terminal C is referred to as a user C, a user of the mobile terminal D is referred to as a user D, and a user of the mobile terminal E is referred to as a user E). Each of these mobile terminals has been applied the process shown in Fig. 4 and provided with the client ID from the server S. The user C and the user D publish contents in blogs and the like. The address book data of the mobile terminal D is registered in the address book folder of the mobile terminal C. Further, the address book data of the mobile terminal C and the address book data of the mobile terminal E are registered in the address book folder of the mobile terminal D. Furthermore, the address book data of the mobile terminal D is registered in the address book folder of the mobile terminal E.

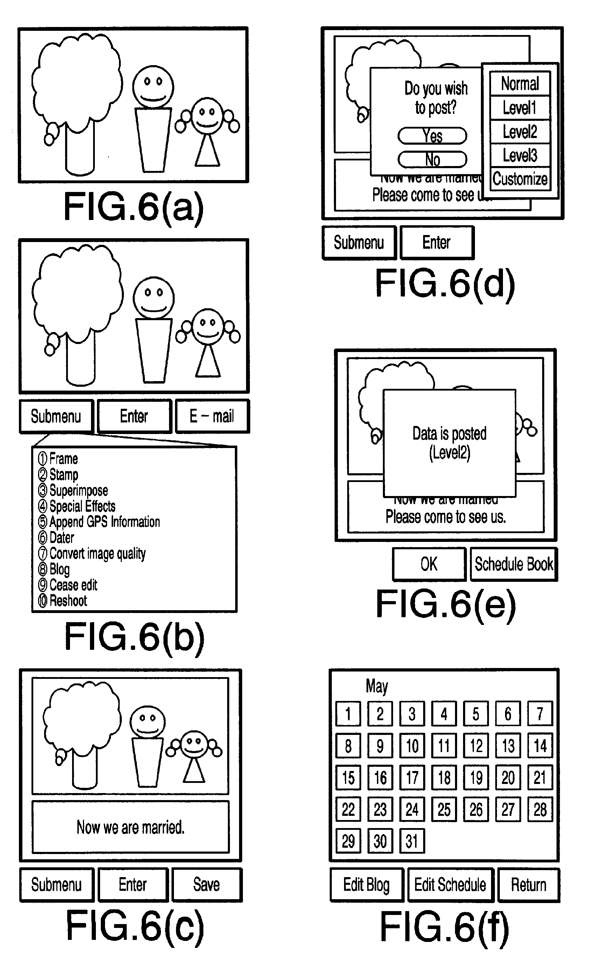

Fig. 6 is diagrams to illustrate a flow to create a blog according to the embodiment of the present invention. The mobile terminal C is taken as an example to be explained. When the user C shoots a photograph with the camera module 118 of the mobile terminal C (see Fig. 6(a)), the image data is temporarily stored, for example, in the RAM 104 and displayed in the display unit 108 (see Fig. 6 (b)). In this regard, buttons respectively indicating "Submenu," "Save," and "E-mail" are displayed on a lower side of the captured image. When "Submenu" is selected through a user operation, pop-up submenus respectively indicating "Frame," "Stamp," "Superimpose," "Special effects," "Append GPS information," "Dater," "Convert image quality," "Blog," "Cease edit," and "Reshoot" are displayed. In the present embodiment, a known GPS receiver (not shown) is equipped in the mobile terminals. "Append GPS information" is a menu to append, for example, GPS information (i.e., information on the current location) of the mobile terminal obtained through the GPS receiver to various data.

When "Blog" is selected through a user operation, the CPU 100 develops the blog data creation program stored in the ROM 102 in the predetermined area of RAM 104 to execute. After activating the blog data creation program, a frame to prompt the user to enter text, buttons respectively indicating "Submenu," "Save," and "E-mail" are created and displayed on the lower side of the captured image (see Fig. 6(c)). When text is entered in the frame through a user operation, and "Save" is selected, contents data (blog data) including the captured image and the text data is saved in the storage unit 116 in the HTML format. It is noted that the frame may be created through an arbitrary user operation.

After the blog data is saved in the HTML format, an image to prompt the user C to select as to whether the blog is published or not is displayed. Next, when "Yes" is selected through a user operation, pop-up buttons respectively indicating "Normal," "Level 1," "Level 2," "Level 3," and "Customize" are displayed (see Fig. 6(d)). With these buttons, disclosure level of the contents of the blog, etc. is set. "Normal" indicates a disclosure level of a default setting. "Level 1,'' "Level 2," and "Level 3" indicate increasing disclosure levels. "Level 1" indicates a lowest restriction level for publication, while "Level 3" indicates a highest restriction level for publication. When "Customize" is selected, the user C can set the disclosure level arbitrarily.

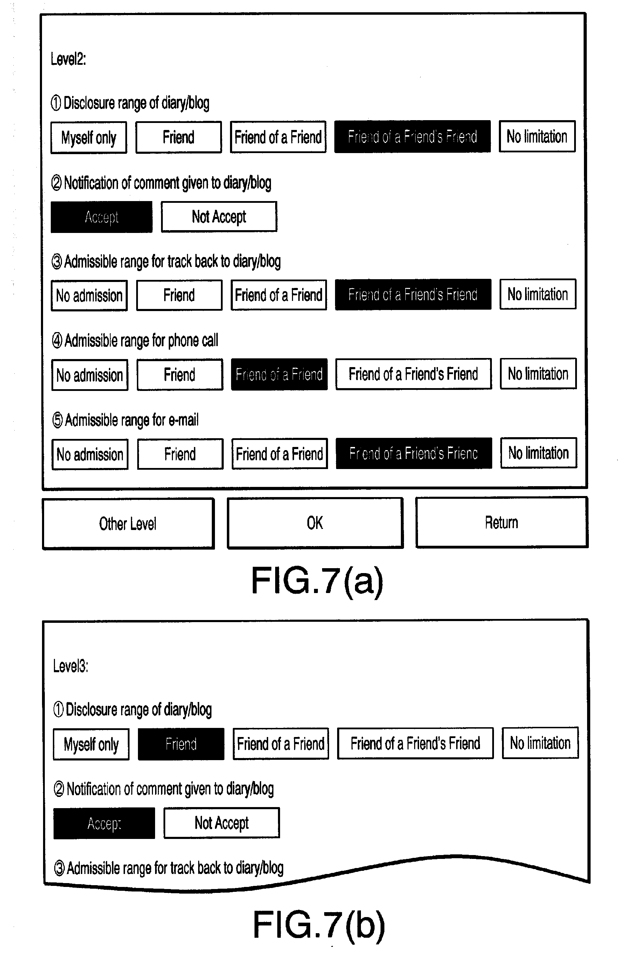

Fig. 7 (a) is a screen to set the disclosure level "Level 2" according to the embodiment of the present invention. Fig. 7(b) is a screen to set the disclosure level "Level 3" according to the embodiment of the present invention. "Level 1," "Level 2," and "Level 3" initially indicate increasing disclosure levels; however, the user C may arbitrarily modify the configuration values. The configurable entries in the present embodiment are "Disclosure group range of diary/blog," "Notification of comment given to diary/blog," "Admissible group range for track back to diary/blog," "Admissible group range for phone call," and "Admissible group range for e-mail". Alternatively, the terms "track back" in "Admissible group range for track back to diary/blog" may be replaced with "comment with a link" and "link".

For the entry "Disclosure group range of diary/blog," one of five stages "Myself only," "Friend," "Friend of a friend," "Friend of a friend's friend," and "No limitation" can be set. When "Myself only" is set, a diary/blog of the user C can be browsed by the user C exclusively (i.e., access authority is not given to any others). "Friend" refers to all of the persons registered in the address book folder of the user C. Therefore, when "Friend" is set, the diary/blog can be disclosed to the user C and all the persons registered in the address book folder. "Friend of a friend" refers to a person who accesses the diary/blog through a hyperlink of a blog of the "Friend" (i.e., "Friend" who is registered in the address books of "Friend" of the user C, which will be described later in detail). Therefore, when "Friend of a friend" is set, the diary/blog can be disclosed to the user C, all the persons who are registered in the address book folder, and the persons who access the diary/blog through hyperlinks of the blog of the "Friend". With a predetermined setting, the disclosure group range can be even more broadened (i.e., "friend of friend of friend's friend," etc. When "No limitation" is set, any user can browse the diary/blog. Alternatively, "Friend" can be categorized into more granulated levels (e.g., on a personal name basis, a group (e.g., family) basis, etc).

For the entry "Notification of comment given to diary/blog," one of "Accept" and "Not accept" can be set. In the entries "Admissible group range for track back to diary/blog," "Admissible group range for phone call," and "Admissible group range for e-mail," one of five stages "No admission," "Friend," "Friend of a friend," "Friend of a friend's friend," and "No limitation" can be set. When "No admission" is set in the entry "Admissible group range for track back to diary/blog," no user can link a track back to the diary/blog of the user C. When "No admission" is set in the entry "Admissible group range for phone call," no user can make a phone call to the user C through the blog (described later in detail). When "No admission" is set in the entry "Admissible group range for e-mail," no user can send an e-mail message to the user C through the blog (described later in detail).

As shown in Fig. 7(a), in "Level 2," the "Disclosure group range of diary/blog" is limited to be within "Friend of a friend's friend," "Accept" is set in the entry "Notification of comment given to diary/blog," the "Admissible group range for track back to diary/blog" is limited to be within "Friend of a friend's friend," the "Admissible group range for phone call" is limited to be within "Friend of a friend," and the "Admissible group range for e-mail" is limited to be within "Friend of friend's friend". As shown in Fig. 7(b), in "Level 3," "Disclosure group range of diary/blog" is limited to be within "Friend," and "Accept" is set in the entry "Notification of comment given to diary/blog". As mentioned above, the "Level 3" is in the level higher restriction level than "Level 2". Therefore, for example, the "Disclosure group range of diary/blog" is limited to be a narrower range than the group range limited in the entry in "Level 2".

In Fig. 6(d), when for example "Level 2" is selected, the blog data stored in the storage unit 116 is stored in the web server 122 to be the blog data for publication. In this regard, the blog data and disclosure level setting information ("Level 2" set in Fig. 6(d)) are associated with each other to be stored. The blog data for publication is published to the web in the disclosure level "Level 2" according to the blog data publication program (see Fig. 6(e)). However, in order to reduce resources in the web server 122, the image data may not necessarily be stored in the web server 122. In this case, the image data is stored solely in the storage unit 116, and in the web server 122, for example, data used to refer to the image data in the storage unit 116 (e.g., URL, etc.) is stored.

It should be noted in Fig. 6(e) that a button indicating "To schedule book" is displayed on the lower side of the blog. The created blog is administrated on a daily basis in the schedule book by the PIM (see Fig. 6(f)). When "To schedule book" is selected, a calendar is displayed on the display unit 108. At this point, a button indicating "Edit blog" is displayed on the lower side of the screen. When "Edit blog" is selected with, for example, a date May 12th being selected, the blog created on May 12th can be shifted into a mode in which the blog can be edited (or newly created).

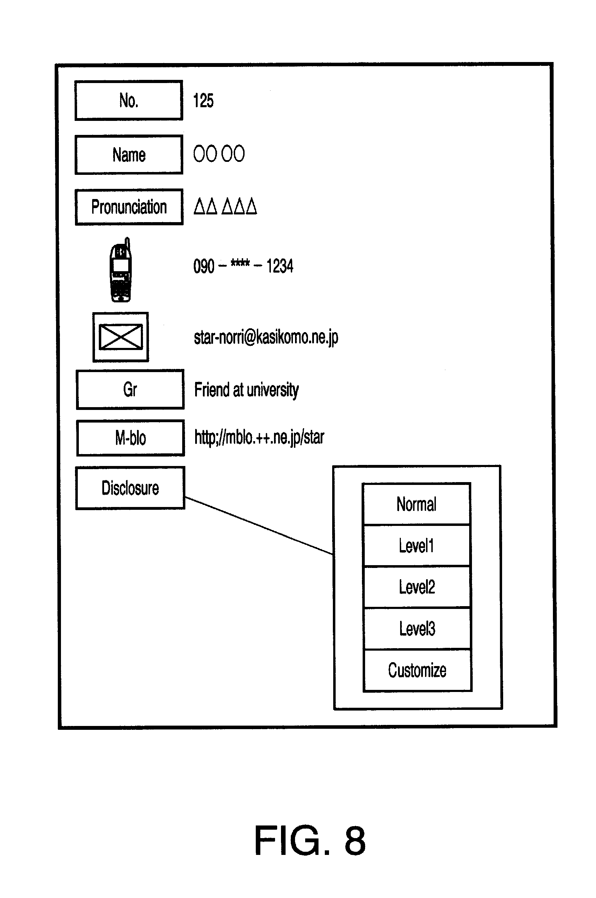

In the above example, in Fig. 6(a), the level of disclosure for the blog is set; however, for example, the level of disclosure may be set based on the address book. Fig. 8 is a diagram to illustrate information of a friend registered in the address book folder in the mobile terminal according to the embodiment of the present invention.

In the address book, information including a registration number (i.e., "125" displayed following "No." in Fig. 8), a name (represented by four circles displayed following "Name"), pronunciation (represented by six triangles following "Pronunciation"), a telephone number (i.e., "090-****-1234" displayed following a "sign representing a cell phone"), an e-mail address (i.e., "star-norri@kasikomo.ne.jp" displayed following a "sign representing an e-mail"), a group (i.e., "friend at university" displayed following "Gr"), a URL of a blog (i.e., "http://mblo.++.ne.jp/star" displayed following "M-blo"), and a disclosure level (i.e., "Level 2" displayed following "Disclosure"). The entries registration number, name, pronunciation, telephone number, e-mail address, and group are information included in an address book of a known mobile terminal. The entry "M-blo" indicates a URL of a blog created by the user (whose name is represented by the four circles). The level of disclosure indicates a disclosure level of the blog of the user C to be published to the user (whose name is represented by the four circles) and to the group "friend at university". That is, in the example shown in Fig. 8, the disclosure level can be set on an individual basis and on a group basis. The blog in the "M-blo" (i.e., the blog in "http://mblo.++ne.jp/star") is updated, and an update notifying message can be transmitted in an e-mail to the mobile terminal C from the mobile terminal of the user (whose name is represented by the four circles). Alternatively, an URL in the address book of the mobile terminal C may be obtained by the RSS. In the latter configuration, a function to deliver the updated blog data as RSS information is installed in the mobile terminal of the user (whose name is represented by the four circles).

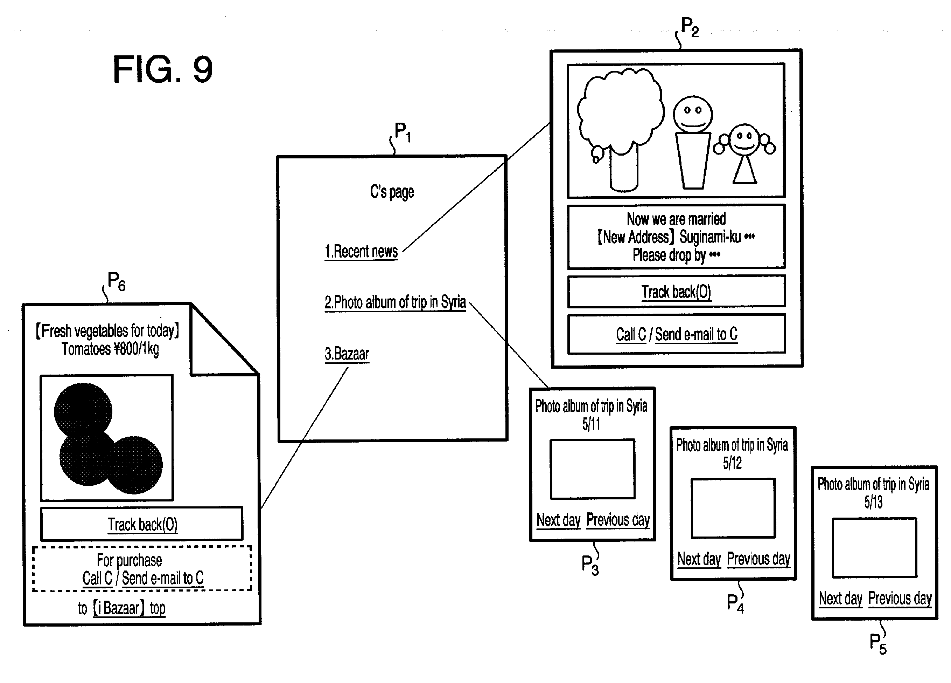

Fig. 9 is a diagram to illustrate contents to be published by the user C according to the embodiment of the present invention. The contents of the user C are configured with, for example, six pages (pages P1 through P6). A front page P1 is a menu page for the contents, which is located on an upper most directory of the contents. In this page, links to a blog page P2 (see "1. Recent news" in Fig. 9), a diary page P3 ("2. Photo album of trip in Syria"), a bazaar page P6 ("3. Bazaar") are provided. The diary is configured with a plurality of daily based independent pages (diary pages P3, P4, P5) .

When the contents are configured with a plurality of pages, as shown in Fig. 9, the user C can set the disclosure level of the overall contents. In the present embodiment, the bazaar page P6 is a page intended for trades which are open to general public. Therefore, it is preferable that the overall disclosure level of the contents is not applied to the bazaar page P6. It is preferable that the bazaar page P6 is open to various users who can access external published sites (e.g., a site provided by the cell phone company) being linked.

Further, the user C can set the disclosure level of the contents on a page basis. For example, the front page P1 can be set the disclosure level "Level 2" (e.g., "Friend of a friend") while the blog page P2 can be set the disclosure level "Level 3" (e.g., "Friend"), and the diary pages P3-P5 can be set the disclosure level "Level 2" (e.g., "Friend of a friend").

When the entries "Admissible group range for phone call" and "Admissible group range for e-mail" in "Level 2" are limited to "Friend," and when the viewer of the blog page P2 is a "Friend," anchors indicating "Call C" and "Send e-mail to C" are displayed on the lower side of the display, as shown in Fig. 9. Meanwhile, when the viewer of the blog page P2 is a "Friend of a friend," the user C does not permit the viewer to call or send an e-mail to the user C. Therefore, the anchors are not displayed on the lower side of the display. Accordingly, the viewer as the "Friend of a friend" cannot call the user C or send an e-mail to the user C. When the anchors are displayed and the anchor "Call C" is selected through a user operation, the mobile terminal of the viewer can automatically make a phone call to the mobile terminal C. When the anchor "Send e-mail to C" is selected, a mailer is activated in the viewer's mobile terminal with the mobile terminal C being designated as an address of the e-mail.

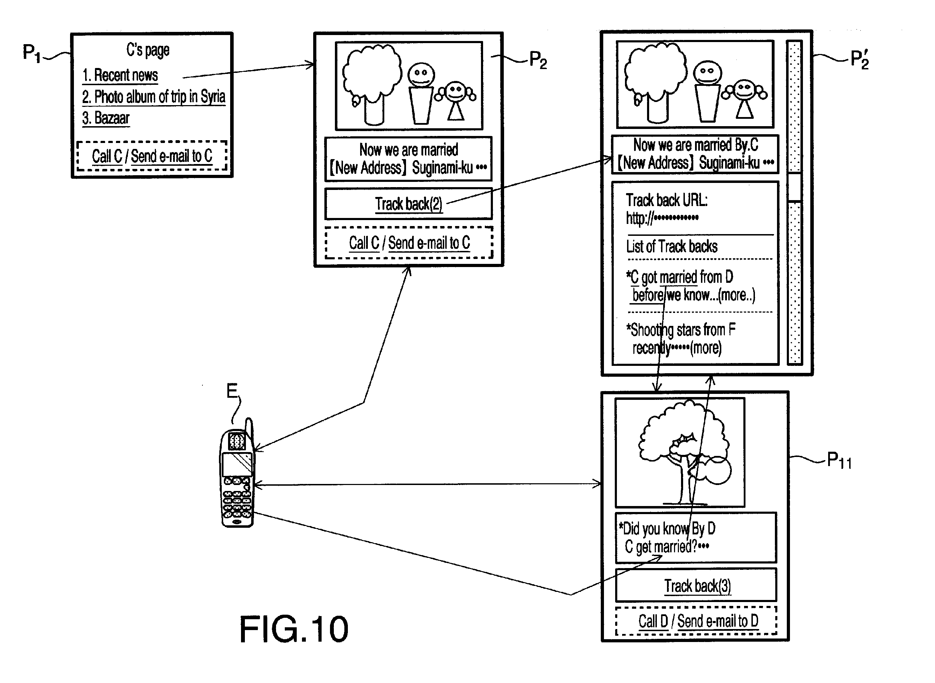

Next, referring to Figs. 10 through 12, a process to be performed within the mobile terminals when the user E views a blog of the others (e.g., the users C, D) according to the embodiment of the present invention. The blog page P2' is a blog of the user C, which displays track backs in detail. The blog page P2' is displayed when "Track back (2)" in the blog page P2 is selected. The blog page P 11 is a blog created by the user D. As described above, the address book data of the mobile terminals C and E is registered in the address book folder of the mobile terminal D. Meanwhile, the address book folder of the mobile terminal E registers solely the address book data of the mobile terminal D. The blog page P2' is provided with a track back from the user D. The blog page P 11 is linked with the blog of the user C. Thus, the contents of the mobile terminal C and the mobile terminal D are linked with each other through the blogs.

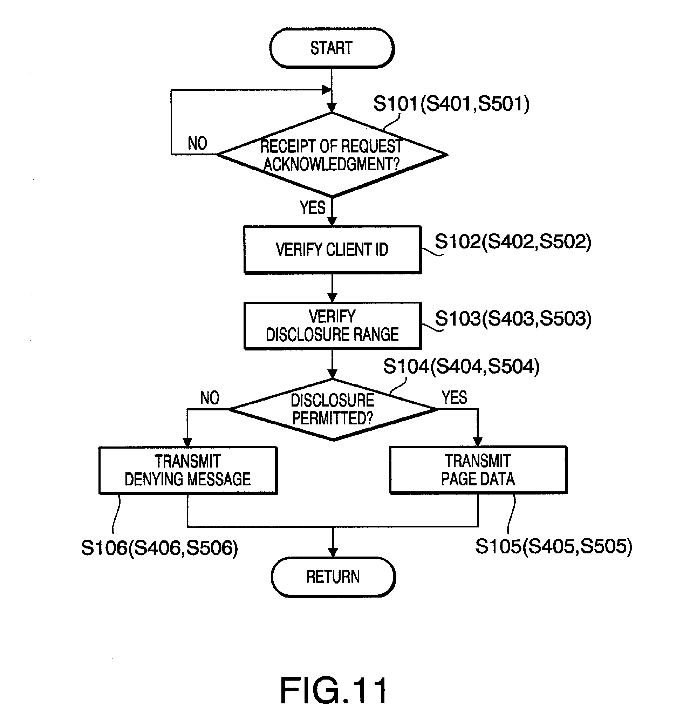

Firstly, referring to Figs. 10 and 11, a process to be executed within the mobile terminals when the user E views the blog of the user D will be described. Fig. 10 is a diagram to illustrate a process to be performed within the mobile terminal as a server (the mobile terminal D in the present embodiment) and the mobile terminal as a client (the mobile terminal E in the present embodiment). Fig. 11 is a flowchart to illustrate a process to be executed in the mobile terminal as the server.

When, for example, a URL of the blog of the mobile terminal D (the blog page P11) is selected through a user operation in the mobile terminal E, the browser of the mobile terminal E transmits a browse request for the blog and information (which includes at least the client ID) of the mobile terminal E itself stored in the storage unit 116 to the mobile terminal D. The mobile terminal D receives the request acknowledgment from the mobile terminal E (S101: YES) and verifies the client ID (S102). Next, the mobile terminal D activates the access authority check program to refer to the web server 122 and verifies the disclosure range of the blog being requested to browse (S103). The disclosure range of the blog page P11 is identical to the range shown in Fig. 7(a).

The mobile terminal D compares the client ID received in S101 and the disclosure range verified in S103 to judge as to whether the blog of itself can be disclosed to the mobile terminal E (S104). It is noted that the address book data (including the client ID) of the
mobile terminal E is registered in the address book folder of the mobile terminal D. Therefore, the mobile terminal D judges that the user E to be a "Friend." Meanwhile, the disclosure range of the blog page P11 is limited within "Friend of a friend's friend," therefore, the
mobile terminal D judges that the blog page P11 can be disclosed to the mobile terminal E (S104: YES). Next, the data for the blog page P11 is transmitted to the mobile terminal E (S105). Upon receipt of the data for the blog page P11, the browser of the mobile terminal E executes a predetermined process to render the blog page P11. Thus, the user E can browse the blog of the user D.

In the above example, the mobile terminal judges admissibility of the disclosure of the blog based on the comparison of the disclosure range of the blog page P11 and the client ID. However, the admissibility of the disclosure of the blog may be judged based on comparison between the client ID and a group to which the user E belongs. In this configuration, the mobile terminal D performs the following process in place of S103 and S104.

The mobile terminal D judges as to whether the user E belongs to any group registered in the address book of the mobile terminal D based on the received client ID. When the user E is not included in the address book, the process terminates. When the user E belongs to a group, a disclosure range set to the group is checked to judge as to whether the blog can be disclosed to the user E. According to the judgment result, one of S105 and S106 is performed.

Optionally, when the URL of the blog of the mobile terminal D is selected in the mobile terminal E through a user operation, it may be configured such that the browser of the mobile terminal E transmits the browse request for the blog and complete information of the user E. In this configuration, the mobile terminal D updates the address book data when the address book data of the user E included in the address book folder of itself and the received information from the user E are compared and difference is found. This configuration may be preferable when the telephone number of the mobile terminal E is changed. Thus, the mobile terminal E can dynamically update the address book data of the mobile terminal D. Further, it can be even more preferable with an additional process in which the user D is allowed to select as to whether the address book data should be updated.

Next, referring to Figs. 10 through 12, a process to be executed within the mobile terminals when the user E browses the blog of the user C will be described.

When a hyperlink indicating, for example, "C marries" is selected in the mobile terminal E through a user operation while the blog page P 11 is being browsed, the mobile terminal E transmits a browse request of the blog page P2 based on the hyperlink and the client ID to the mobile terminal C. The mobile terminal C receiving this executes the processes in S101-S103.

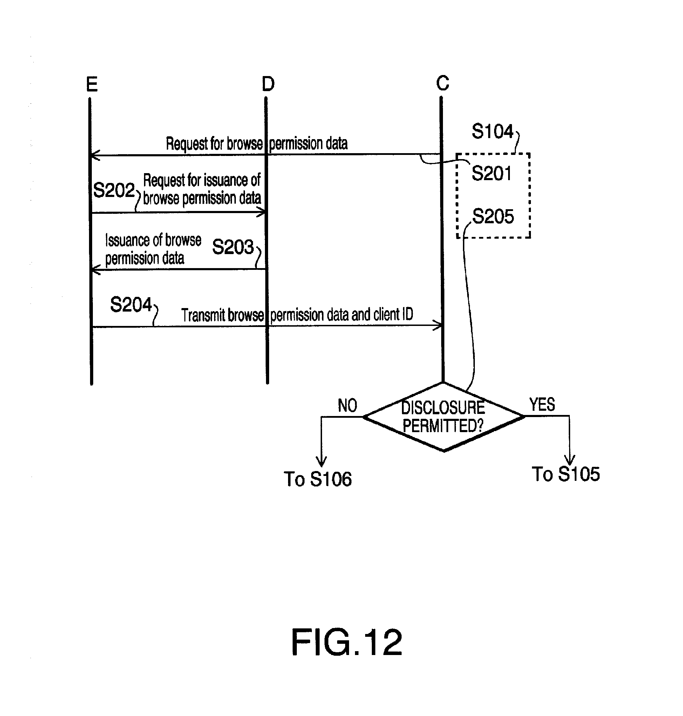

The mobile terminal C compares the client ID received in S101 and the disclosure range checked in S103 to judge as to whether the blog of itself can be disclosed to the mobile terminal E (S104). In this step, when the disclosure range of the blog of the mobile terminal C is set to be, for example, "No limitation," the data for the blog page P2 is transmitted to the mobile terminal E. Upon receipt of the data for the blog page P2, the browser of the mobile terminal E execute a predetermined process to render the blog page P2. Thus, the user E can browse the blog of the user C. Meanwhile, the disclosure level is limited to be within, for example, "Friend of a friend," a process shown in Fig. 12 is executed within the mobile terminals. It is noted that steps in S201 and S205 in Fig. 12 represent the step S104 in Fig. 11 being granulated for explanatory convenience.

As described above, the address book data of the mobile terminal E is not registered in the address book folder of the mobile terminal C. Therefore, the mobile terminal C determines that the user E is not a "Friend." Next, the mobile terminal C activates the browse permission information program and requests the mobile terminal E for browse permission data. The browse permission data in the present embodiment is, for example, data to certify the user requesting to browse the blog is a "Friend of a friend."

The mobile terminal E, in response to the request from the mobile terminal C, requests for issuance of the browse permission data to the mobile terminal D, which is an origin of the link (S202). The mobile terminal D can issue the browse permission data exclusively to a "Friend." The user E is registered in the address book of the mobile terminal D; therefore, the user E is recognized as a "Friend." Thus, the mobile terminal D, in response to the request from the mobile terminal E, issues the browse permission data (S203). The mobile terminal E transmits the issued browse permission data and the client ID of itself to the mobile terminal C (S204). The mobile terminal C refers to the browse permission data being received and judges that the mobile terminal E as a "Friend of a friend" (i.e., the blog can be disclosed) (S205: YES). Accordingly, the mobile terminal C transmits the data for the blog page P2 to the mobile terminal E (S105 in Fig. 11). Upon receipt of the data of the blog page P2, the browser of the mobile terminal E executes a predetermined process to render the blog page P2. Thus, the user E can browse the blog of the user C. When, for example, the browse permission data for a "Friend of friend's friend" is required, a process similar to that shown in Fig. 12 can be performed within the mobile terminals.

In S104, if it is judged that the blog of the user C cannot be disclosed to the user E (e.g., the disclosure range of the blog of the user C is limited to "Friend," and the user E is a "Friend of a friend"), (S104: NO), the mobile terminal C transmits a page, in which a message indicating, for example, "Access denied" is displayed, to the mobile terminal E. Alternatively, the mobile terminal C may transmit a page, which can be disclosed to the user E (e.g., the front page P1) among the contents of itself, to the mobile terminal E (S106).

In S106, when the page which can be disclosed to the mobile terminal E is transmitted, the page may include the anchors which indicate, for example, "Call C" and "Send e-mail to C." In this configuration, the user E can arbitrarily contact with the user C, and personal networks can be broadened based on the SNS.

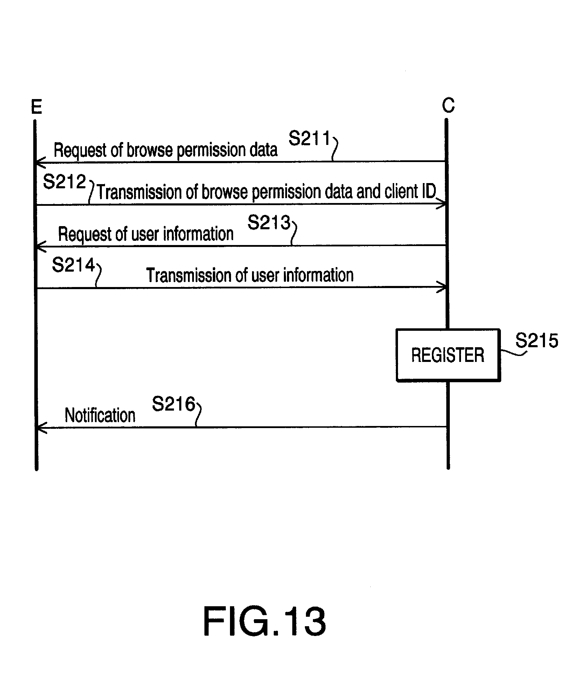

Further, in place of S106, when a user who requests to view the blog (i.e., the user E) is a "Friend of a friend," it is configurable such that the user is certified as a "Friend" and information of the user is registered in the address book folder. Hereinafter, referring to Fig. 13, the configuration will be described.

In S104, when the blog of the user C cannot be disclosed to the user E (S104: NO), the mobile terminal C requests the mobile terminal E for browse permission data as shown in Fig. 13 (S211). The mobile terminal E performs steps similar to S202 and S203 with the mobile terminal D in response to the request. Next, the mobile terminal E transmits the browse permission data issued by the mobile terminal D and the client ID of itself to the mobile terminal C (S212). The mobile terminal C refers to the browse permission data in response to the transmission from the mobile terminal E. As a reference result, the mobile terminal C determines that the mobile terminal E is a "Friend of a friend" and requests the mobile terminal E for user information (S213). The mobile terminal E, in response to the request, transmits user information (e.g., "name," "telephone number," "e-mail address," and "client ID") to the mobile terminal C (S214). The mobile terminal C registers the user information being received in the address book folder (S215). After the registration, notification, for example in an e-mail format, is transmitted to the mobile terminal E (S216). In this step, information concerning the user C and an URL of other contents may be attached to the e-mail. With the above series of steps being performed in the mobile terminals C and E, the users C and E can exchange information such as telephone numbers with each other. Thus, the users can broaden their personal networks in the SNS according to the present embodiment.

Concurrently, in the web server 122 of a mobile terminal as a server, information such as visitor records of the viewers who accessed the contents is stored. Such records can be helpful information to develop the contents.

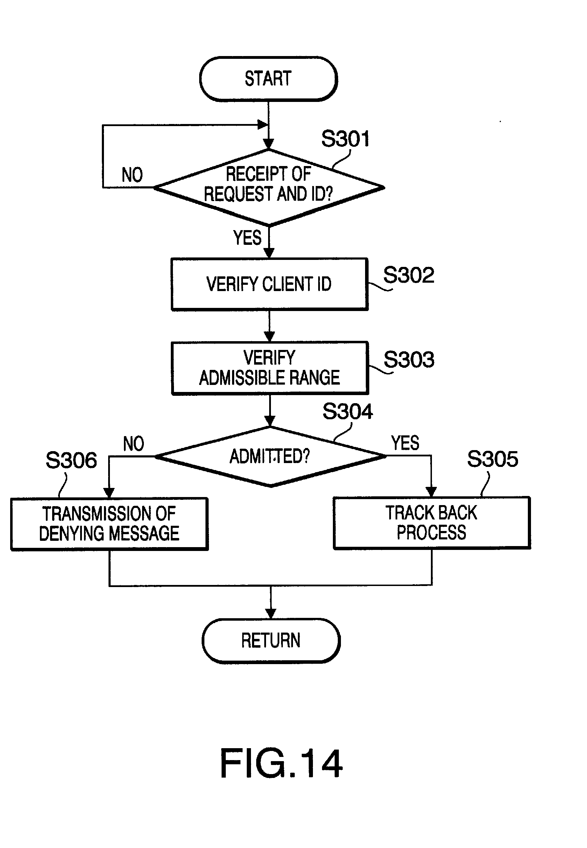

Fig. 14 is a flowchart to illustrate a process to be executed in response to a track back according to the embodiment of the present invention. A case in which the mobile terminal D requests the mobile terminal C for a track back will be described as an example. When a user operation to provide a track back in the blog of, for example, the mobile terminal C is given to the mobile terminal D, the mobile terminal D transmits a track back request and the client ID of itself to the mobile terminal C. The mobile terminal C receives the request and the ID transmitted from the mobile terminal D (S301: YES) and confirms the client ID (S302). Next, the mobile terminal C activates the access authority check program to refer to the web server 122 and checks for the admissible range of the track back (S303). The admissible range is, for example, "Friend" in the present embodiment.

The mobile terminal C refers to the client ID received in S301 and the admissible range confirmed in S303 to judge as to whether the track back from the mobile terminal D can be provided to the blog of itself (S304). In this configuration, the mobile terminal C registers the address book data (including the client ID) of the mobile terminal D in the address book folder. Therefore, the mobile terminal C judges that the user D is a "Friend." The admissible range for track back is limited to "Friend," therefore, the mobile terminal C permits the mobile terminal D to provide a track back (S304: YES) and notifies the mobile terminal D. In response, the mobile terminal D transmits track back data to the mobile terminal C. The mobile terminal C executes a known process for track back according to the track back data being received and provides the track back from the mobile terminal D to the blog of itself (S305). In S304, if the track back is not permitted (S304: NO), the mobile terminal C transmits a page, in which a message indicating for example "your track back is refused" is displayed, to the mobile terminal D (S306).

For a comment and a link, a process similar to the process for track back shown in Fig. 14 can be executed.

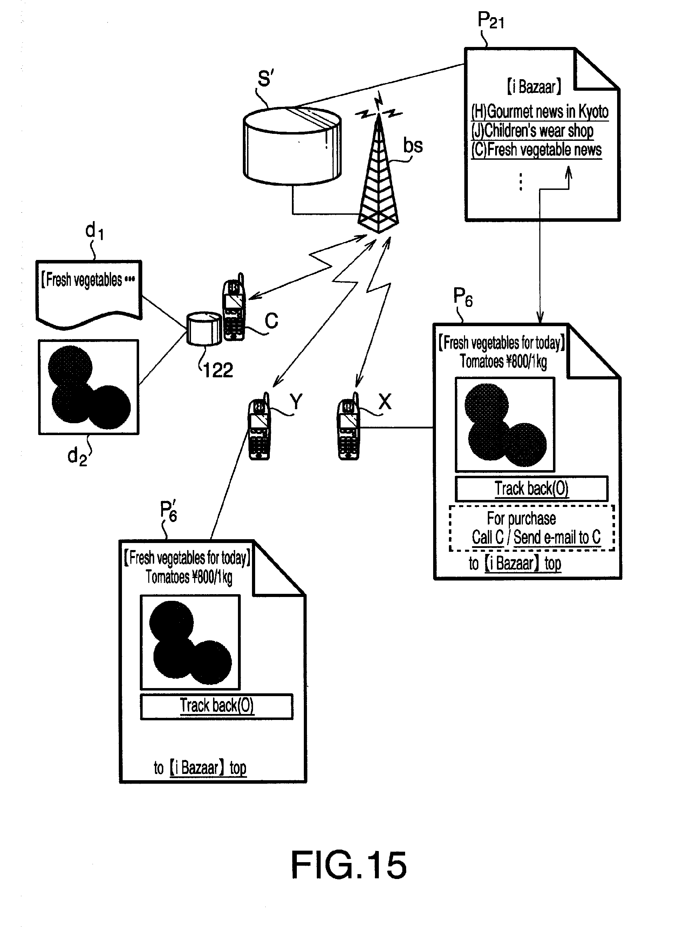

Next, referring to Fig.15, the bazaar in the contents of the user C will be described. An object indicated by a reference sign "S'" is a server managed by, for example, the cell phone company of the mobile terminal communication system. Objects indicated by reference signs "X," "Y" are mobile terminals 10 owned by users who can use the SNS of the present embodiment. (Hereinafter, the "X" and the "Y" respectively represent a mobile terminal X and a mobile terminal Y. Further, a user of the mobile terminal X is referred to as a user X, and a user of the mobile terminal Y is referred to as a user Y.) The mobile terminal X is provided with access authority to access the contents of the user C. The mobile terminal Y is not provided with access authority to access the contents of the user C. In Fig. 15, the web server 122 and data concerning the bazaar stored therein (i.e., HTML data dl and image data d2) are shown for explanatory necessity.

The server S' includes a URL data base, in which URLs of users who create bazaars through the SNS according to the present embodiment are stored. The server S' publishes a bazaar list page P21 based on the database through the web without limitation. In the bazaar list page P 21, hyperlinks to bazaar pages of each user are listed. As described above, the bazaar pages of the users are intended for trades which are open to general public. Therefore, the bazaar pages are generally published with no limitation. Accordingly, the users can selects one of the hyperlinks listed on the bazaar list page P 21 and browse a bazaar page provided by an unacquainted user. The users can select as to whether their URLs should be posted on the bazaar list page P 21 upon creation of the contents. In other words, when a user does not wish to disclose the bazaar page to open public, the user may select not to post the URL on the bazaar list page P21.

When, for example, "(C) News for fresh vegetables" is selected through a user operation in the mobile terminal D while the bazaar list page P 21 is browsed, the mobile terminal X accesses the web server 122 of the mobile terminal C through the relay base station bs to request for data concerning a bazaar page P6. The mobile terminal C transmits the data concerning the bazaar page P6 to the mobile terminal X in response to the request. The browser of the mobile terminal X processes the received data and renders the bazaar page P6. In the bazaar page P6, when a hyperlink indicating "To [i bazaar] top" is selected, the mobile terminal X accesses the bazaar list page P21 of the server S', and the bazaar list page P21 is again displayed on the browser.

When "(C) News for fresh vegetables" is selected in the mobile terminal Y, the mobile terminal X accesses the web server 122 through the relay base station bs to request for the data concerning the bazaar page P6. It is noted; however, the mobile terminal Y is not provided with access authority to access the contents of the user C. (The user Y may be, for example, a complete stranger to the user C.) It may not be preferable in terms of security that a telephone number and an e-mail address of an individual become known to open public. Therefore, the mobile terminal C transmits data for bazaar page P6', in which the anchors such as "Call C" and "Send e-mail to C" are deleted, to the mobile terminal Y. The browser of the mobile terminal Y processes the received data and renders the bazaar page P6'. When the user Y, for example, wishes to purchase items sold by the user C, the user Y can upload notification to notify the intention to the server S'. The notification can be downloaded when the user C accesses the server S'. With the above process being accomplished, the user C can sell items to open public without his/her information being known to the public.

In the present embodiment, permissibility and impermissibility for each process such as browsing contents and providing a track back is judged based on the address book, which is fundamental to the mobile terminals. Therefore, it is not necessary to newly create data to be used for judging the permissibility and the impermissibility in the server so that workloads in the entire system and in the server can be reduced.

### (Second Embodiment)

Further, the judgment of permissibility and impermissibility for contents browsing based on the address book data of the mobile terminals can be made in a system, in which contents created by the users in the server, being managed by the cell phone company in the mobile phone network, are stored and delivered.

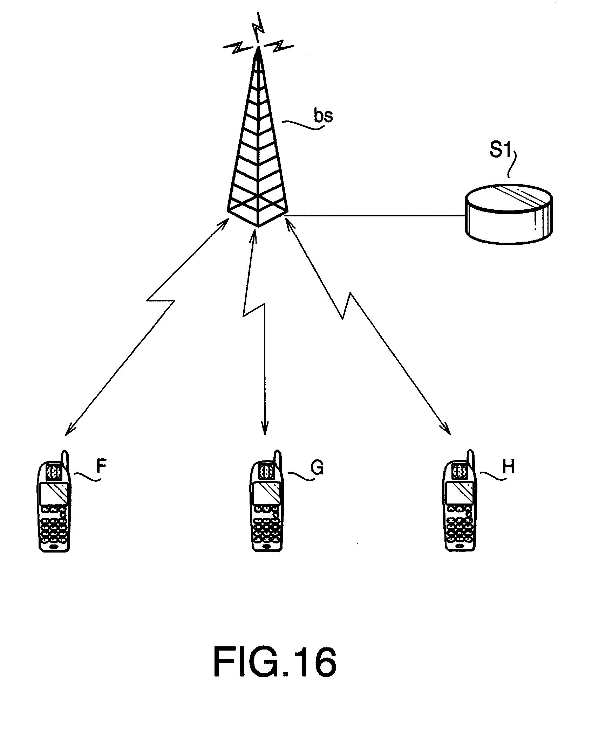

Fig. 16 is a diagram to illustrate the SNS according to the second embodiment of the present invention. An object indicated by a reference sign "S1" is a server managed by the cell phone company of the mobile phone network. Objects indicated by reference signs "F," "G," and "H" are mobile terminals 10 owned by users who can use the SNS of the present embodiment. (Hereinafter, the "F," the "G," and the "H" respectively represent a mobile terminal F, a mobile terminal G, and a mobile terminal H. Further, a user of the mobile terminal F is referred to as a user F, a user of the mobile terminal G is referred to as a user G, and a user of the mobile terminal H is referred to as a user H.) Each of these mobile terminals has been applied the process shown in Fig. 4 in the first embodiment and provided with the client ID from the server S1. In the present embodiment, the user F publishes a blog. The address book data of the mobile terminal G is registered in the address book folder of the mobile terminal F. Further, the address book data of the mobile terminal F and the address book data of the mobile terminal H are registered in the address book folder of the mobile terminal G. Furthermore, the address book data of the mobile terminal G is registered in the address book folder of the mobile terminal H.

The server S1 is provided with a program and data to publish blogs created in the mobile terminals 10 and uploaded to the server S1. The data stored in the server S1 includes a copy of address book data set of each mobile terminal 10, blog data for publication, information concerning access authorities of other users who access the contents of the blogs. Programs stored in the server S1 include, for example, an address book data administration program, a blog data publication program, an access authority check program, a blog data providing program, and a CGI program, etc. The address book data administration program is a program to make a duplicate of address book data obtained from a terminal of an SNS user to update. The fundamental functions of the other programs are similar to those of the programs stored in the web server 122, which is included in the mobile terminal 10 in the first embodiment. However, the server S1 has duplicates of the address book data sets of all the mobile terminals 10 (a set of address book data provided to each mobile terminal) which uses the SNS. Therefore, the access authority check program is configured to search through all the duplicates of the address book data sets of the mobile terminals 10 and judge the access authorities (i.e., relationships between the users such being a "Friend of a friend") of the mobile terminals 10 based on the address books by itself. Therefore, the browse permission information program is not used in the present SNS.

The mobile terminals 10 of the present embodiment have a configuration similar to the mobile terminal of the first embodiment; however, the web server 122 is not necessarily mandatory. The ROM 102 includes a blog data creation program, a browser, an RSS reader, a mailer, a PIM, etc., in addition to a blog data transfer program and an address book data transfer program. The blog data transfer program is a program to upload blog data to the server S1 through the mobile phone network upon publication of the blog data being created. The address data transfer program is a program to transfer the address book data to the server.

Next, referring to Figs. 6(a)-(f), 11 and 17, a series of processes according to the second embodiment of the present invention will be described. In the present embodiment, the blog data created by users and copies of the address book data sets of the mobile phones are stored in the server managed by the cell phone company of the mobile phone network so that the blog is delivered from the server.

Firstly, a process, in which the address book data of the mobile terminals 10 is transmitted to the server S1 and duplicates are stored, will be described. When a user is registered in the SNS, the server S1 activates the address book data administration program, and a transfer request for the address book data is transmitted to the mobile terminal 10 of the user through the mobile phone network. The mobile terminal 10 receiving the transfer request from the server S1 activates the address book data transfer program and transfers the entire address book data in the address book folder (i.e., an address book data set) of the mobile terminal 10 to the server S1. In this regard, a specific piece of address book data may be configured no to be transmitted to the server S1. The server S1 stores the duplicated and transferred address book data set in a predetermined memory unit (e.g., an HDD) in association with the other information concerning the user in the server S1. The data duplicated and stored is referred to as a "duplicate of the address book data set." Thereafter, when address book data is added in the mobile terminal 10 or the address book data is modified, the address book data administration program is activated, and the updated data (i.e., the added or the updated address book data) is transferred to the server. The server receiving the updated data updates the duplicate of the address book data set according to the updated data. Thus, the server S1 maintains the duplicate of the address book data of the mobile terminal 10 being registered in the SNS synchronized with the original data.

Next, referring to Figs. 6(a)-(f), a process between creation and publication of a blog by the user F on the server S1 will be described. The blog data is created in the mobile terminal F similarly to the first embodiment and stored in the storage unit 116 of the mobile terminal F (Figs. 6(a)-(c)). Further similarly, a screen, in which the user F is prompted to select as to whether the blog should be posted, is displayed. When "YES" is selected through a user operation, next, a screen, in which a disclosure level is set, is displayed (Fig. 6(d), Figs. 7(a)-(b)). When the disclosure level is set through a user operation, the blog data stored in the storage unit 116 is transmitted to the server S1 through the antenna 112 and the relay base station bs by the communication unit 114 and stored in a predetermined memory unit (e.g., an HDD) as blog data for publication. Concurrently, corresponding disclosure level setting information (i.e., "Level 2" set in Fig. 6(d)) is transmitted along with the blog data, and the blog data is stored in association with the disclosure level setting information. Further, the blog data is stored in association with a duplicate of address book data set of the mobile terminal (i.e., the mobile terminal F) in which the blog data is created. Thus, the blog data for publication is published to the web in the disclosure level "Level 2" according to the blog data publication program (Fig. 6(e)).

Next, referring to Fig. 11, a process to be performed within the server S1 and the mobile terminal H when the user H browses a blog created by the user G will be described. Fig. 11 (S401-S406) is a flowchart to illustrate a process to be executed in the server S1. That is, a process substantially same with the process in which the blog is published on the web server 122 of the mobile terminal in the first embodiment is performed; however, the web server 122 is replaced with the server S1. A browse request for the blog from the mobile terminal H is issued to the server S1 which maintains the blog data for publication.

When the server S1 receives the browse request for the blog of the user G from the mobile terminal H (S401: YES), the client ID simultaneously transmitted from the mobile terminal H is confirmed (S402) . Thereafter, the access authority check program is activated to confirm the disclosure range of the blog being requested by the browse request (S403). The disclosure range of the blog of the user G is identical to that shown in fig. 7(a).

The server S1 compares the client ID received in S401 and the disclosure range confirmed in S403 to judge as to whether the blog of the user G can be disclosed to the mobile terminal H (S404). In this regard, the duplicate of the address book data set of the mobile terminal G includes the address book data (including the client ID) concerning the mobile terminal H. Therefore, the server S1 judges that the user H is a "Friend" of the user G. The disclosure range of the blog of the user G is limited to be within "Friend of friend's friend," therefore, the server S1 judges that the blog of the user G can be disclosed to the mobile terminal H (S404: YES). Thereafter, the blog data of the user G is transmitted to the mobile terminal H (S405). Upon receipt of the blog data of the user G, the browser of the mobile terminal H executes a predetermined process and renders the blog data. Thus, the user H can browse the blog of the user G.

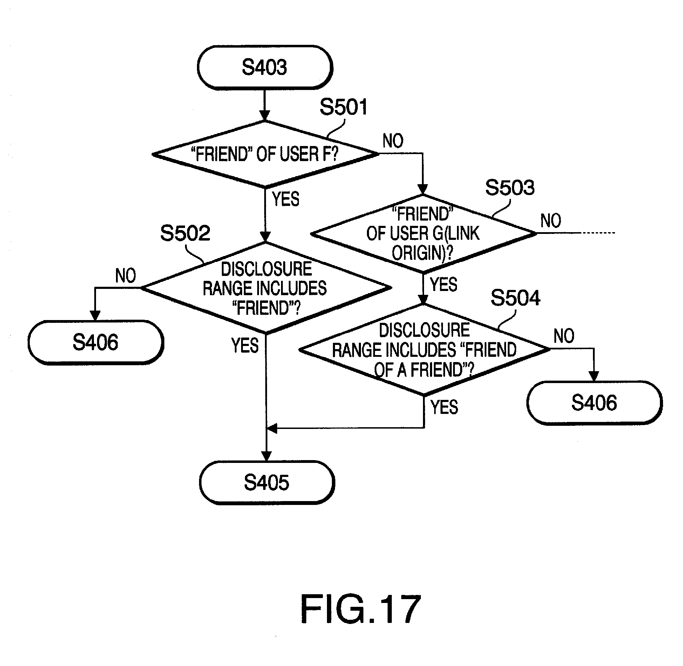

Next, referring to Figs. 11 and 17, a process to be executed within the server S1 and the mobile terminal H when the user H browses the blog created by the user F will be described.

When the blog of the user G is browsed through the mobile terminal H, and a hyperlink to the blog of the user F is selected through a user operation, the mobile terminal H transmits a browse request for the blog of the user F based on the hyperlink and the client ID to the server S1. The server S1 receiving these executes steps S401 through S403.

The server S1 compares the client ID received in S401 and the disclosure range confirmed in S403 to judge as to whether the blog of the user F can be disclosed to the mobile terminal H (S404). If the disclosure range of the blog of the user F is "No limitation," the blog data is transmitted to the mobile terminal H. After receiving the blog data, the browser of the mobile terminal H executes a predetermined process to render the blog data. Thus, the user H can browse the blog of the user F. Meanwhile, if the disclosure range is limited to be within "Friend of a friend," a process shown in Fig. 17 is executed in the server S1. It is noted that the process in S501 through S504 illustrates the step S404 in Fig. 11 in detail.

As described above, the duplicate of the address book data set in the mobile terminal F does not include the address book data concerning the mobile terminal H. Therefore, the server S1 judges that the user H is not a "Friend" of the user F (S501: NO). Next, the server S1 searches through the duplicate of the address book data set of the user G, who created the contents as the link origin. The address book data concerning the user H is included in the duplicate of the address book data set of the mobile terminal G; therefore, it is judged that the user H is a "Friend" of the user G (S503). In other words, the user H is considered as a "Friend of a friend" of the user F. Thereafter, the disclosure range of the blog of the user F confirmed in S403 is referred to. The disclosure range is limited to be within "Friend of a friend," which includes the relationship between the user F and the user H (i.e., "Friend of a friend") (S504: YES); therefore, the server S1 transmits the blog data of the user F to the mobile terminal H (S405 in Fig. 11). After receiving the blog data, the browser of the mobile terminal H executes a predetermined process to render the blog data. Thus, the user H can browse the blog of the user F. Meanwhile, if the disclosure range is limited to be within "Friend of a friend's friend," a similar process is applied to the duplicate of the address book data set of the user who created the contents as the link origin.

In S404, if the blog of the user F is judged not to be disclosed to the user H (e.g., the disclosure range of the blog of the user F is limited to be within "Friend," and the user H is a "Friend of a friend") (S404: NO,) the server S1 transmits a page, in which a message for example indicating "Access denied" is displayed, to the mobile terminal H. Alternatively, the mobile terminal F may transmit a page, which can be disclosed to the user H (e.g., the front page) among the contents of itself, to the mobile terminal H. Contents created by the cell phone company may also be transmitted (S406).

In the above embodiment, the client ID, issued when a user is registered in the SNS, is used to identify the client; however, another unique identification may be used. For example, if the mobile terminal is a cell phone, a telephone number provided by the cell phone company to the terminal upon signing up and a manufacturer's number provided to the mobile terminal by a manufacturer upon shipping may be used. Optionally, in many cases, the users who use information services such as an SNS have e-mail addresses usable in mobile terminals which are issued by the cell phone company; therefore, the mobile terminals may be identified by the e-mail addresses. Further, if the mobile terminal is a LAN terminal complied with the IEEE standard, a MAC address provided to every network interface may be used for identification. Furthermore, in the present embodiment, the identifying information of the client is not transmitted to anywhere except the server being administrated by the cell phone company; therefore, even confidential information can be used as identification of the clients.

In the present embodiment, the duplicates of the address book data of all the mobile terminals which uses the SNS are maintained in the server synchronized with the originals so that the server can use the duplicates to judge permissibility and impermissibility of each process, such as browsing the contents also stored in the server and providing a track back. Thus, the server is not required to communicate with the terminal of the user who publishes the contents in order to judge the permissibility and the impermissibility. Therefore, traffic in the mobile communication network is reduced, and further, processes in higher speed can be achieved. Further, the web server of each mobile terminal is not accessed by another terminal, which is advantageous in terms of security. It is noted that, similarly to the first embodiment, the disclosure range of the contents can be easily set by using the address book.

(Third Embodiment) The above describes an example in which the contents created by the user and the duplicate of the address book data set are stored in the server managed by the cell phone company of the mobile phone network. However, solely contents may be stored in the server, and the address book data in the mobile terminals may be directly referred to in order to judge the permissibility and the impermissibility of browsing the contents.

Next, referring to Figs. 6(a)-(f), Fig. 11, Fig. 18, and Fig. 19, a third embodiment of the present invention will be described. In the present embodiment, blog data created by a user is stored in a server managed by the cell phone company of the mobile phone network, and the server can directly refer to the address book data of the mobile terminals of the users in order to judge the permissibility and the impermissibility of browsing the contents.

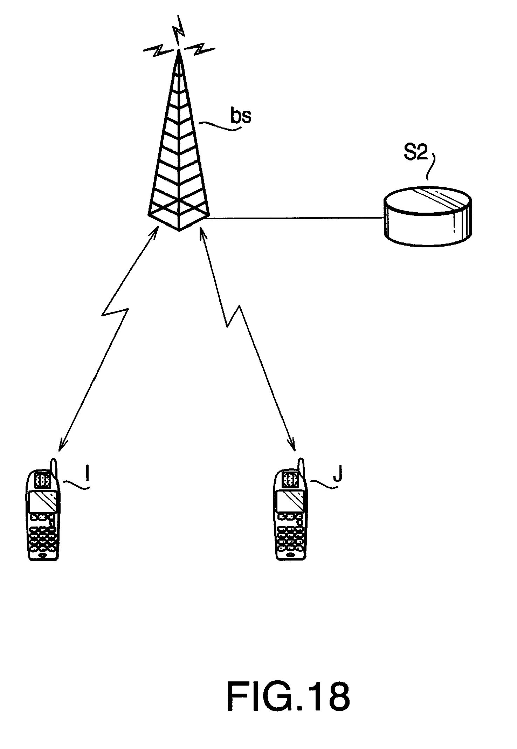

Fig. 18 is a diagram to illustrate the SNS according to the embodiment of the present invention. An object indicated by a reference sign "S2" is a server managed by the cell phone company of the mobile phone network. Objects indicated by reference signs "I" and "J" are mobile terminals 10 owned by users who can use the SNS of the present embodiment. (Hereinafter, the "I" and the "J" respectively represent a mobile terminal I and a mobile terminal J. Further, a user of the mobile terminal I is referred to as a user I, and a user of the mobile terminal J is referred to as a user J.) Each of these mobile terminals has been applied the process shown in Fig. 4 in the first embodiment and provided with the client ID from the server S2. In the present embodiment, the user I publishes a blog. The address book data of the mobile terminal J is registered in the address book folder of the mobile terminal I. Further, the address book data of the mobile terminal I is registered in the address book folder of the mobile terminal J.

The server S2 is provided with a program and data to publish blogs created in the mobile terminals 10 and uploaded to the server S2. The data stored in the server S2 includes information concerning access authorities of other users who access the contents of the blogs. Further, programs stored in the server S2 include, for example, a blog data publication program, an access authority check program, a relationship reference program, a blog data providing program, and a CGI program, etc. The fundamental functions of the programs (except the relationship reference program) are similar to those of the programs stored in the web server 122, which is included in the mobile terminal 10 in the first embodiment. The relationship reference program is a program to transmit identifying information (e.g., a client ID) of a user (e.g., a user who requests to browse certain contents) to another user (e.g., a user who publishes the contents) to inquire as to whether the address book of the another user includes the address book data including the identifying information so that relationship between the user and the another user who publishes the contents can be determined according to a reply to the inquiry. In the present embodiment, the blog created by the user J is published in the server S2. A process between creation and publication of the blog in the server S2 is similar to the process shown in Fig. 16.

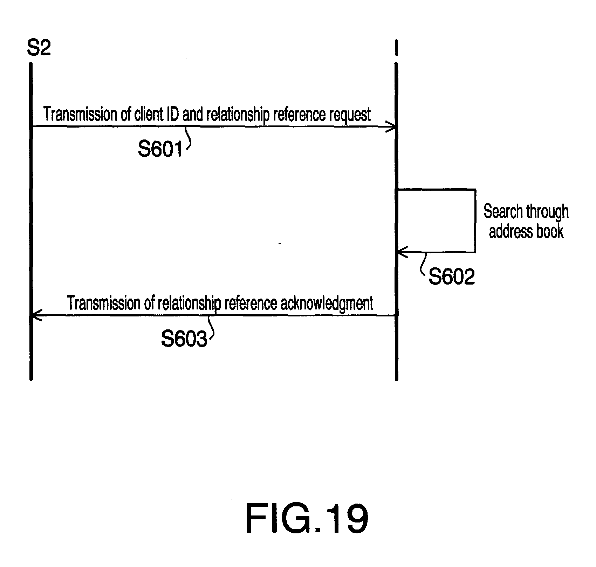

Next, referring to Figs. 11 and 19, a process to be executed within the server S and the mobile terminals J, I when the user J browses the blog created by the user I will be described. Fig. 11 (S501-S506) shows a flowchart to be executed in the server S. That is, a process substantially same with the process in the SNS in the above-described Fig. 16 is executed. In this process, the browse request from the mobile terminal J is issued to the server S2 which contains the blog data for publication.

When the server S2 receives the browse request for the blog of the user I from the mobile terminal J (S501: YES), the client ID simultaneously transmitted from the mobile terminal J is confirmed (S502). Thereafter, the access authority check program is activated to confirm the disclosure range of the blog being requested by the browse request (S503). The disclosure range of the blog of the user I is identical to that shown in fig. 7(a).

The server S2 compares the client ID received in S501 and the disclosure range confirmed in S503 to judge as to whether the blog of the user I can be disclosed to the mobile terminal J (S504). In this regard, the server S2 activates the relationship reference program to inquire the mobile terminal I to refer to the relationship between the user I and the user J (i.e., as to whether the user J is a "Friend" of the user I). In other words, it is referred to as to whether the address book data concerning the user J is included in the address book of the mobile terminal I. Fig. 19 is a diagram to illustrate a sequence of the relationship reference process. The server S2 transmits the relationship reference request and the client ID obtained in S501 to the mobile terminal I (S601). Thereafter, the mobile terminal I searches through the address book for the address book data including the client ID obtained in S601 (S602). If the address book data including the client ID is found, for example "1" is transmitted to the server as a relationship reference reply. Meanwhile, if the address book data including the client ID is not found, for example, "0" is transmitted to the server (S603). In the present embodiment, the address book of the mobile terminal I contains the address book data (including the client ID) concerning the mobile terminal H. Therefore, the relationship reference reply "1" is transmitted to the server S2. The server S2 receiving the relationship reference reply judges that the user J is a "Friend" of the user I. The disclosure range of the blog of the user I is limited to be within "Friend of friend's friend," therefore, the server S2 judges that the blog of the user I can be disclosed to the mobile terminal J (S504: YES). Thereafter, the blog data of the user I is transmitted to the mobile terminal J (S505). Upon receipt of the blog data of the user I, the browser of the mobile terminal J executes a predetermined process and renders the blog data. Thus, the user J can browse the blog of the user I.

If the user J is judged not to be a "Friend" of the user I, the mobile terminal K (not shown), which provided a hyperlink to the user J to access the blog of the user I, is inquired about a relationship with the user J. When the user J is judged to be a "Friend" of the user K, subsequently, the user I is inquired about a relationship with the user K. In this regard, if the user K is judged to be a "Friend" of the user I, the server S2 judges that the user J is a "Friend of a friend" of the user I. Since the disclosure range of the blog of the user I is limited to be within "Friend of a friend's friend," the server S2 judges that the blog of the user I can be disclosed to the mobile terminal J (S504: YES). If the user K is judged no to be a "Friend" of the user I, the server S2 judges that the user K is not related with the user I. Accordingly, the user J is out of the disclosure range for the contents of the user I, and the server S2 judges that the blog of the user I cannot be disclosed to the mobile terminal J (S504: NO). When the user J is judged not to be a "Friend" of the user K, the above-described process is repeated to hyperlinks retroactively until the user who publishes the contents as a link origin is judged to be a "Friend" of the user K (alternatively, until the user K is judged to be out of the disclosure range for the blog of the user I).

In the present embodiment, the server managed by the cell phone company contains the contents, but not an address book. Therefore, the server is not required to have a storage to maintain an address book. Further, the address book, which is personal information, is not required to be transmitted to the server; therefore, it is advantageous in protecting the personal information. In the present embodiment, similarly to the first embodiment, the disclosure range of the contents can be easily set based on the address book. Further, similarly to the second embodiment, the web server of each mobile terminal is not accessed by the other terminals; therefore, it is advantageous also in security.

Thus, the illustrative embodiments of the present invention have been described above. However, the present invention is not necessarily limited to these embodiments, but numerous variations are available. For example, in the embodiments, access authority of a user who requests to browse the contents is judged based on the "client ID." However, in another embodiment, the "client ID" may be replaced with a "telephone number," an "e-mail address" (i.e., information conventionally contained in the address book), and a "device identification number," which is provided by the manufacturer of the mobile terminal. In this configuration, the server S is not mandatory, and an SNS-like service is available among mobile terminals. Further, the present invention can be provided as a method and a system which can be achieved by using data contained in a known address book.

Further, when the blog data is published in the web, GPS information obtained by a GPS receiver can be stored in association with the blog data in the web server 122. Thus, the contents of the blogs and the like can be even more enriched by the location information.

Furthermore, the mobile terminal in the above embodiments is provided with the web server 122 to process the contents data. However, in another embodiment, the contents data may be processed by, for example, a server to provide the SNS (hereinafter, referred to as an SNS server) and a server at home of each user. The server at home can be, for example, a "SyncML"-enabled server, in which data to be managed by the PIM (e.g., data in the address book folder) can be synchronized with the corresponding data in the mobile terminals.

In the configuration in which the contents are processed in the SNS server and the server at home, the contents of the blog and the like created in a mobile terminal can be transmitted to the servers in an e-mail, and the like. Thus, the contents data of the users can be stored in the SNS server and the server at home. When the mobile terminal E accesses the blog of the user C and the user D, for example, the mobile terminal E transmits the access request to the SNS server or the servers at home of the users C and D. The server receiving the request transmits the same to the mobile terminals C and D. The mobile terminals C and D receiving the request performs a process similar to the ones shown in Figs 11-14 (i.e., a process to judge the access authority of the mobile terminal E to access the contents). Thereafter, the judgment result is transmitted to the servers. When a positive judgment result is received, the servers transmit the blog data of the users C and D to the mobile terminal E. Meanwhile, a negative judgment result is received; a message to inform that the access is denied is transmitted to the mobile terminal E. Thus, also in this configuration, the access authority of the user who requests to browse is judged by the mobile terminal based on the address book of itself.

Further illustrative embodiments of the present invention will be described hereinbelow.

According to an aspect of various embodiments of the present embodiment, the communication terminal is a telephone terminal, and the communication destination information included in address book data is a telephone number.

According to another aspect, the communication terminal is an e-mail terminal, and the communication destination information included in the address book data is an e-mail address.

According to an aspect of various embodiments of the present embodiment, the user identifying information is a device identifying number which is assigned to the external device.

According to an aspect of various embodiments of the present embodiment, the contents are created by the user of the communication terminal by using the communication terminal.

According to an aspect of various embodiments of the present embodiment, each of the communication terminal and the server is provided with a synchronization unit, which conforms the address book data and the duplicate with each other.

According to an aspect of various embodiments of the present embodiment, the predetermined process to request the mobile terminal is obtaining and browsing predetermined data.

According to an aspect of various embodiments of the present embodiment, the mobile terminal is provided with a server, which includes a content creation unit to create contents being the predetermined data and a content storing unit to store the created contents in a predetermined data area, to publish contents in the network.

According to an aspect of various embodiments of the present embodiment, the contents are blog data which are deliverable by the RSS. In this configuration, the mobile terminal may be provided with an operation unit to achieve various functions through user operations. The mobile terminal may store the blog created in the contents creation unit in the predetermined data area to be published in response to a predetermined user operation. The mobile terminal may be provided with an image capturing unit to capture an image of an object. In this configuration, the content creation unit may store the image captured by the image capturing unit as the blog data in response to a predetermined user operation.

According to an aspect of various embodiments of the present embodiment, the mobile terminal with the address book is provided with an address book judging unit to judge as to whether information concerning the external device is included in the address book when the external device requests for permission to execute a predetermined process, and a permission judging unit to judge as to whether the predetermined operation is permitted based on a judgment result of the address book judging unit so that the permission judging unit can permit the external device to execute the predetermined process when it is judged that the information concerning the external device is included in the address book. Further, in another aspect, the permission judging unit can not permit the external device to execute the predetermined process when it is judged that the information concerning the external device is not included in the address book. The information concerning the external device can be at least one of a telephone number, an e-mail address, and an ID assigned to the external device.

According to another embodiment, the mobile terminal with the address book is provided with a relationship judging unit to judge relationship between the external device and the mobile terminal itself based on the address book when the external device requests for permission to execute the predetermined process, and a permission judging unit to judge as to whether the predetermined process is permitted based on a judgment result made by the relationship judging unit. The relationship with the mobile terminal itself can be arbitrarily configured in the address book.

Further, the mobile terminal can be provided with a permissible level setting unit to set a permissible level to permit the predetermined process. In this configuration, the permission judging unit can judge as to whether the predetermined process is permitted based on the permissible level being set and the judgment result made by the relationship judging unit. Furthermore, the permission judging unit can set the permissible level based on the address book.

According to another embodiment, the mobile terminal is provided with a short-range communication unit to communicate with the external device in a short range, and the predetermined process includes a short-range communication with the external device.

According to another embodiment, the mobile terminal is provided with a network communication unit to be connected with a network and a content storing unit to store contents of the mobile terminal itself in a predetermined location in the network, and the predetermined process includes assigning access authority to the external device to access the contents. Further, when the contents are configured with a plurality of pages, the permissible level setting unit can set the permissible levels to assign access authorities to access each page independently on a page basis.

Further, the mobile terminal may be provided with a server to store and publish the contents to the network.

According to an aspect of various embodiments of the present embodiment, the mobile terminal communication system is a system having a plurality of mobile terminals according to the embodiments of the present invention which are interconnected within the network.

According to an aspect of various embodiments of the present embodiment, the mobile terminal communication system is a mobile terminal communication system, having a plurality of mobile terminals, which are interconnected within the network, and each of which has a server with a content creation unit and a content storing unit, and is provided with an external server to store data created in the mobile terminals and maintains address book data of the mobile terminals conformed with corresponding data in the mobile terminals.

According to an aspect of various embodiments of the present embodiment, each of the mobile terminals configuring the mobile terminal communication system is provided with a mobile terminal information requesting unit to request the mobile terminals other than a requested terminal for relationship information when the relationship information transmitted from the requested terminal device meets a predetermined criterion, a mobile terminal information transmitting unit to transmit the relationship information to the requested mobile terminal when the relationship information is requested, and a mobile terminal information register unit to register the relationship information transmitted from the requested mobile terminal in the address book.

Further, according to the above mobile terminal communication system, at least one of the mobile terminals is provided with a server to store and publish contents of itself in the network, and the predetermined process includes assigning access authority to the other mobile terminals to access the contents.

## Claims

1. A communication system in which a communication terminal having address book data and a server storing a duplicate of the address book data are interconnected within a network,
wherein the communication terminal is provided with:
a data storing unit to store the address book data;
a data updating unit to update the address book data; and
a communication unit to communicate with another communication terminal by using communication destination information which is stored in the address book data, and
wherein the server is provided with:
a duplicate storing unit to store the duplicate of the address book data;
a content storing unit to store contents being associated with a user of the communication terminal;
a user identifying information obtaining unit to obtain user identifying information which identifies a user of an external device, being other than the communication terminal, in response to a permission request to obtain the contents from the external device; and
a judging unit to judge permissibility of obtaining the contents based on the user identifying information obtained by the user identifying information obtaining unit, the communication destination information included in the duplicate of the address book data, and/or information in association with those.

2. The communication system according to claim 1,
wherein the communication terminal is a telephone terminal; and
wherein the communication destination information included in the address book data is a telephone number.

3. The communication system according to claim 1,
wherein the communication terminal is an e-mail terminal; and
wherein the communication destination information included in the address book data is an e-mail address.

4. The communication system according to claim 1,
wherein the user identifying information is a device identifying number which is assigned to the external device.

5. The communication system according to claim 1,
wherein the contents are created by the user of the communication terminal by using the communication terminal.

6. The communication system according to claim 1,
wherein each of the communication terminal and the server is provided with a synchronization unit, which conforms the address book data and the duplicate with each other.

7. A communication system in which a communication terminal and a server are interconnected within a network,
wherein the communication terminal is provided with:
a data storing unit to store the address book data;
a data updating unit to update the address book data; and
a communication unit to communicate with the server and with another communication terminal by using communication destination information which is stored in the address book data,
wherein the server is provided with:
a content storing unit to store contents being associated with a user of the communication terminal;
a user identifying information obtaining unit to obtain user identifying information which identifies a user of an external device, being other than the communication terminal, in response to a permission request to obtain the contents from the external device; and
a judging unit to transmit the user identifying information to the communication terminal to inquire about as to whether the communication destination information corresponding to the user identifying information is included in the address book data and judge permissibility of obtaining the contents based on a result of the inquiry.

8. The communication system according to claim 7,
wherein the communication terminal is a telephone terminal; and
wherein the communication destination information included in the address book data is a telephone number.

9. The communication system according to claim 7,
wherein the communication terminal is an e-mail terminal; and
wherein the communication destination information included in the address book data is an e-mail address.

10. The communication system according to claim 7,
wherein the user identifying information is a device identifying number which is assigned to the external device.

11. A communication terminal with an address book, comprising:
an address book search unit to search through the address book in response to a permission request for permission to execute a predetermined process from an external device; and
a permissibility judging unit to judge permissibility of the predetermined process based on a search result from the address book search unit.

12. The communication terminal according to claim 11,
wherein the predetermined process is obtaining and browsing predetermined data.

13. The communication terminal according to claim 12, comprising:
a server, which includes a content creation unit to create contents being the predetermined data and a content storing unit to store the created contents in a predetermined data area, to publish contents in the network.

14. The communication terminal according to claim 13,
wherein the contents are blog data which are deliverable by an RSS.

15. The communication terminal according to claim 14, further comprising:
an operation unit to achieve various functions through user operations,
wherein the blog created in the contents creation unit is stored in the predetermined data area to be published in response to a predetermined user operation.

16. The communication terminal according to claim 15, further comprising:
an image capturing unit to capture an image of an object,
wherein the content creation unit stores the image captured by the image capturing unit as the blog data in response to a predetermined user operation.

17. A communication terminal with an address book, comprising:
an address book judging unit to judge as to whether information concerning an external device is included in the address book when the external device requests for permission to execute a predetermined process; and
a permission judging unit to judge as to whether the predetermined operation is permitted based on a judgment result of the address book judging unit.

18. The communication terminal according to claim 17,
wherein the permission judging unit permits the external device to execute the predetermined process when it is judged that the information concerning the external device is included in the address book.

19. The communication terminal according to claim 17,
wherein the permission judging unit does not permit the external device to execute the predetermined process when it is judged that the information concerning the external device is not included in the address book.

20. The communication terminal according to claim 17,
wherein the information concerning the external device is at least one of a telephone number, an e-mail address, and an ID assigned to the external device.

21. A communication terminal with an address book, comprising:
a relationship judging unit to judge relationship between the external device and the communication terminal itself based on the address book when the external device requests for permission to execute a predetermined process; and
a permission judging unit to judge as to whether the predetermined process is permitted based on a judgment result made by the relationship judging unit.

22. The communication terminal according to claim 21,
wherein the relationship with the communication terminal itself can be arbitrarily configured in the address book.

23. The communication terminal according to claim 21, further comprising:
a permissible level setting unit to set a permissible level to permit the predetermined process,
wherein the permission judging unit judges as to whether the predetermined process is permitted based on the permissible level being set and the judgment result made by the relationship judging unit.

24. The communication terminal according to claim 21,
wherein the permission level setting unit sets the permissible level based on the address book.

25. The communication terminal according to claim 21, further comprising:
a short-range communication unit to communicate with the external device in a short range,
wherein the predetermined process includes a short-range communication with the external device.

26. The communication terminal according to claim 21, comprising:
a network communication unit to be connected with a network; and
a content storing unit to store contents of the communication terminal itself in a predetermined location in the network,
wherein the predetermined process includes assigning access authority to the external device to access the contents.

27. The communication terminal according to claim 26,
wherein, when the contents are configured with a plurality of pages, the permissible level setting unit sets the permissible levels to assign access authorities to access each page independently on a page basis.

28. The communication terminal according to claim 26, further comprising a server to store and publish the contents to the network.

29. A communication system comprising a plurality of communication terminals according to claim 21, which are interconnected within the network.

30. A communication system comprising a plurality of communication terminals according to claim 13, which are inter connected within the network.

31. A communication system comprising a plurality of communication terminals, each of which is provided with an address book, and which are interconnected within a network,
wherein the communication terminal is provided with:
an address book judging unit to judge as to whether information concerning the other communication terminal is included in the address book when the other communication terminal requests for permission to execute a predetermined process;
a relationship information requesting unit to request the other communication terminal for relationship information concerning relationship between the other communication terminal and itself when it is judged that the information concerning the other communication terminal is not included in the address book;
an issuance requesting unit to request an issuance-capable communication terminal for issuing the relationship information when the relationship information is requested;
a relationship information issuing unit to issue the relationship information to the other communication terminal in response to the issuance request;
a relationship information transmitting unit to transmit the issued relationship information to the communication terminal which requested the relationship information; and
a permissibility judging unit to judge permissibility of the predetermined process based on the relationship information transmitted from the requested communication terminal.

32. The communication system according to claim 31,
wherein each of the communication terminals is further provided with:
a communication terminal information requesting unit to request the other communication terminals other than the requested communication terminal for the relationship information when the relationship information transmitted from the requested communication terminal meets a predetermined criterion; and
a communication terminal information transmitting unit to transmit the information to the communication terminal which requested the information when the information is requested; and
a communication terminal information register unit to register the information transmitted from the requested communication terminal in the address book.

33. The communication system according to claim 31,
wherein at least one of the communication terminals is provided with a server to store and publish contents of itself in the network; and
wherein the predetermined process includes assigning access authority to the other communication terminals to access the contents.
